(19) Europäisches Patentamt
European Patent Office
Office européen des brevets

(11) EP 3 635 040 B1

(12) **EUROPEAN PATENT SPECIFICATION**

(45) Date of publication and mention of the grant of the patent:
**14.10.2020 Bulletin 2020/42**

(21) Application number: **18727838.7**

(22) Date of filing: **06.06.2018**

(51) Int Cl.:
***C08J 5/18*** *(2006.01)* ***C08L 23/08*** *(2006.01)*
***D01F 6/04*** *(2006.01)* ***D01F 6/46*** *(2006.01)*
***D01D 5/42*** *(2006.01)* ***C08F 2/00*** *(2006.01)*
***C08F 4/76*** *(2006.01)* ***C08F 210/16*** *(2006.01)*
***D06N 7/00*** *(2006.01)*

(86) International application number:
**PCT/EP2018/064820**

(87) International publication number:
**WO 2018/224521 (13.12.2018 Gazette 2018/50)**

(54) **POLYETHYLENE FABRIC, AND BACKING AND ARTIFICIAL TURF MADE THEREFROM**

POLYETHYLENSCHLITZFILM, -BAND- ODER -MONOFILAMENT

FILM À FENTE DE POLYÉTHYLÈNE, BANDE OU MONOFILAMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.06.2017 EP 17174644**

(43) Date of publication of application:
**15.04.2020 Bulletin 2020/16**

(73) Proprietor: **Total Research & Technology Feluy**
**7181 Seneffe (BE)**

(72) Inventor: **GEEURICKX, Pieter**
**1700 Dilbeek (BE)**

(74) Representative: **Garcia Martin, Margarita**
**Total Research & Technology Feluy**
**Patent Department**
**Zone Industrielle Feluy C**
**7181 Seneffe (BE)**

(56) References cited:
**EP-A1- 2 374 917**
**WO-A1-2012/005974**
**WO-A1-2012/038471**
**WO-A1-2013/007619**
**WO-A2-2011/134897**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 635 040 B1

## Description

### FIELD OF INVENTION

The present invention relates to a fabric more in particular a backing, such as backing suitable for tufted carpets or artificial turf, the fabric comprising slit films, tapes or monofilaments particularly slit films, tapes or monofilaments comprising a metallocene-catalyzed polyethylene composition.

### BACKGROUND OF THE INVENTION

Polypropylene and polyethylene tapes, slit films or monofilaments are often used for the production of fabrics, e.g. woven fabrics. Such fabrics may be used for various applications including bags, geotextiles, backings for carpets, backings for tufted carpets and artificial turfs, etc.

As compared to polypropylene, polyethylene is generally a more preferred material when a high UV resistance and/or when low temperature impact resistance is required. However, a problem encountered in the art is that the dimensional stability and creep resistance of polyethylene is lower compared to polypropylene, limiting its use in specific applications as e.g. in backings or geotextiles.

Several solutions have been suggested to improve the creep resistance of polyethylene tapes. For instance, the use of UHMWPE has been mentioned, or the application of a cross-linking step or a combination of both. Although these solutions can result effectively in a significant improvement of the creep resistance, they have the obvious drawback of extra cost related to the difficult processing and/or additional processing step. Cross-linked polyethylene also obstructs the recycling process of the polyethylene materials.

Other solutions to improve creep resistance of polyethylene tapes suggest to copolymerize or to graft side groups to the polyethylene backbone. Such solutions provide an improvement of the creep resistance but to the prejudice of a lower tensile strength, which is not desired in certain targeted applications.

Other potential solutions to improve creep resistance of polyethylene tapes suggest the addition of additives like fillers, nucleating agents, multi-walled carbon nanotubes, etc. These solutions have sometimes a limited effect on the creep resistance. In other cases they increase the cost significantly or they have a negative effect on the tensile properties of the tapes.

It would therefore be desirable to produce tapes, such as slit film, or monofilaments based on polyethylene and having improved properties, and in particular improved creep resistance properties, without losing or suffering significant loss in other properties, while keeping a good processability. It is also desirable to extend the use of polyethylene (slit) tapes or monofilaments as material of choice in some specific applications. One example of such specific application concerns the backing of an artificial grass turf with polyethylene grass yarns, where a polyethylene backing would facilitate the recycling of the turf.

### SUMMARY OF THE INVENTION

In accordance with the invention a polyethylene slit film, tape or monofilament is now provided showing improved creep resistance. In addition, a slit film, tape or monofilament is provided, which can have besides an improved creep resistance, also high durability and/or resilience, whilst also ensuring adequate tensile strength, good softness and/or thermal resistance. The present slit film, tape or monofilament can be used in a wide range of applications such as high temperature and low temperature applications. A slit film, tape or monofilament is provided herein which is made from a polyethylene composition that is easy to be processed. The slit film, tape or monofilament can be used to prepare a fabric, such as a backing for artificial turf or for tufted carpets. The present invention provides the solution to one or more of the aforementioned needs.

According to a first aspect of the present invention, a slit film, tape or monofilament is provided, said slit film, tape or monofilament comprising at least 70% by weight based on the total weight of the slit film, ape or monofilament of a metallocene-catalyzed polyethylene composition;
wherein said metallocene-catalyzed polyethylene composition comprises:

a) at least 45% to at most 75% by weight based on the total weight of the metallocene-catalyzed polyethylene composition of a metallocene-catalyzed polyethylene A, wherein said metallocene-catalyzed polyethylene A has

- a density of at most 0.918 g/cm$^3$, as measured according to ISO 1183-2:2004 at a temperature of 23 °C; and
- a melt index MI2 of at most 4.0 g/10 min, as measured according to ISO 1133:2011 Procedure B at a temperature of 190 °C and a load of 2.16 kg; and

b) at least 25% to at most 55% by weight based on the total weight of the metallocene-catalyzed polyethylene composition of a metallocene-catalyzed polyethylene B;
wherein said metallocene-catalyzed polyethylene B has

- a density as measured according to ISO 1183-2:2004 at a temperature of 23 °C which is higher than the density of said metallocene-catalyzed polyethylene A; and

- a melt index MI2 as measured according to ISO 1133:2011 Procedure B at a temperature of 190 °C and a load of 2.16 kg which is higher than the melt index MI2 said metallocene-catalyzed polyethylene A;

and wherein said slit film, tape or monofilament has a titer from at least 100 dTex to at most 1500 dTex.

According to a second aspect, the present invention also encompasses a process for manufacturing a slit film, tape or monofilament, said process comprising the steps of:

i) providing a metallocene-catalyzed polyethylene composition as defined herein;
ii) forming the polyethylene composition of step i) into slit film, tapes or monofilaments preferably into slit film, tapes or monofilaments having a titer from at least 100 dTex to at most 1500 dTex.

According to a third aspect, the present invention also encompasses an article, such as a woven fabric, comprising a slit film, tape or monofilament according to the first aspect of the invention or produced by a process according the second aspect of the invention.

According to a fourth aspect, the present invention also encompasses the use of a slit film, tape or monofilament according to the first aspect of the invention, or produced according to the second aspect of the invention to prepare an article, such as a woven fabric or products made therefrom such as carpet backing; industrial-type bags, sacks or wraps; ropes or cordage; artificial turf and geotextiles, etc.

Preferably, the invention relates to a fabric, comprising slit films, tapes, or monofilaments, said slit films, tapes, or monofilaments comprising at least 70% by weight of a metallocene-catalyzed polyethylene composition, based on the total weight of the slit films, tapes or monofilaments;
wherein said metallocene-catalyzed polyethylene composition comprises:

a) at least 45% to at most 75% by weight based on the total weight of the metallocene-catalyzed polyethylene composition of a metallocene-catalyzed polyethylene A,
wherein said metallocene-catalyzed polyethylene A has

- a density of at most 0.918 g/cm$^3$, as measured according to ISO 1183-2:2004 at a temperature of 23 °C; and
- a melt index MI2 of at most 4.0 g/10 min, as measured according to ISO 1133:2011 Procedure B at a temperature of 190 °C and a load of 2.16 kg; and

b) at least 25% to at most 55% by weight based on the total weight of the metallocene-catalyzed polyethylene composition of a metallocene-catalyzed polyethylene B;
wherein said metallocene-catalyzed polyethylene B has

- a density as measured according to ISO 1183-2:2004 at a temperature of 23 °C which is higher than the density of said metallocene-catalyzed polyethylene A; and

- a melt index MI2 as measured according to ISO 1133:2011 Procedure B at a temperature of 190 °C and a load of 2.16 kg which is higher than the melt index MI2 said metallocene-catalyzed polyethylene A.

Preferably, the invention also relate to a backing for tufted carpets or artificial grass, comprising a fabric according to an embodiment of the invention.

Preferably, the invention also relate to an artificial turf comprising a backing according to an embodiment of the invention.

The present invention will now be further described. In the following passages, different aspects of the invention are defined in more detail. Each aspect so defined may be combined with any other aspect or aspects unless clearly indicated to the contrary. In particular, any feature or statement indicated as being preferred or advantageous may be combined with any other features or statements indicated as being preferred or advantageous.

## DETAILED DESCRIPTION OF THE INVENTION

Before the present slit film, tape or monofilament, processes, articles, and uses encompassed by the invention are described, it is to be understood that this invention is not limited to particular slit film, tape or monofilament, processes, articles, and uses described, as such slit films, tapes or monofilaments, processes, articles, and uses may, of course, vary. It is also to be understood that the terminology used herein is not intended to be limiting, since the scope of the present invention will be limited only by the appended claims.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. When describing the slit films, tapes or monofilaments, processes, articles, and uses of the invention, the terms used are to be construed in accordance with the following definitions, unless the context dictates otherwise.

As used herein, the singular forms "a", "an", and "the" include both singular and plural referents unless the context clearly dictates otherwise. By way of example, "a resin" means one resin or more than one resin.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims and statements, any of the embodiments can be used in any combination.

Preferred statements (features) and embodiments of the slit films, tapes or monofilaments, processes, articles, and uses of this invention are set herein below. Each statement and embodiment of the invention so defined may be combined with any other statement and/or embodiment, unless clearly indicated to the contrary. In particular, any feature indicated as being preferred or advantageous may be combined with any other features or statements indicated as being preferred or advantageous.

Hereto, the present invention is in particular captured by any one or any combination of one or more of the below numbered aspects and embodiments, with any other statement and/or embodiment.

1. A slit film, tape or monofilament comprising at least 70% by weight based on the total weight of the slit film, tape or monofilament of a metallocene-catalyzed polyethylene composition; wherein said metallocene-catalyzed polyethylene composition comprises:

   a) at least 45% to at most 75% by weight based on the total weight of the metallocene-catalyzed polyethylene composition of a metallocene-catalyzed polyethylene A,
   wherein said metallocene-catalyzed polyethylene A has

   - a density of at most 0.918 g/cm$^3$, as measured according to ISO 1183-2:2004 at a temperature of 23 °C; and
   - a melt index MI2 of at most 4.0 g/10 min, as measured according to ISO 1133:2011 Procedure B at a temperature of 190 °C and a load of 2.16 kg; and

   b) at least 25% to at most 55% by weight based on the total weight of the metallocene-catalyzed polyethylene composition of a metallocene-catalyzed polyethylene B;
   wherein said metallocene-catalyzed polyethylene B has

   - a density as measured according to ISO 1183-2:2004 at a temperature of 23 °C which is higher than the

density of said metallocene-catalyzed polyethylene A; and

- a melt index MI2 as measured according to ISO 1133:2011 Procedure B at a temperature of 190 °C and a load of 2.16 kg which is higher than the melt index MI2 said metallocene-catalyzed polyethylene A.

2. The slit film, tape or monofilament according to statement 1, wherein said slit film, tape or monofilament has a titer of at least 100 dTex to at most 1500 dTex.

3. A slit film, tape or monofilament comprising at least 70% by weight based on the total weight of the slit film, tape or monofilament of a metallocene-catalyzed polyethylene composition; wherein said metallocene-catalyzed polyethylene composition comprises:

a) at least 45% to at most 75% by weight based on the total weight of the metallocene-catalyzed polyethylene composition of a metallocene-catalyzed polyethylene A,
wherein said metallocene-catalyzed polyethylene A has

- a density of at most 0.918 g/cm$^3$, as measured according to ISO 1183-2:2004 at a temperature of 23 °C; and

- a melt index MI2 of at most 4.0 g/10 min, as measured according to ISO 1133:2011 Procedure B at a temperature of 190 °C and a load of 2.16 kg; and

b) at least 25% to at most 55% by weight based on the total weight of the metallocene-catalyzed polyethylene composition of a metallocene-catalyzed polyethylene B;
wherein said metallocene-catalyzed polyethylene B has

- a density as measured according to ISO 1183-2:2004 at a temperature of 23 °C which is higher than the density of said metallocene-catalyzed polyethylene A; and

- a melt index MI2 as measured according to ISO 1133:2011 Procedure B at a temperature of 190 °C and a load of 2.16 kg which is higher than the melt index MI2 said metallocene-catalyzed polyethylene A;

and wherein said slit film, tape or monofilament has a titer of at least 100 dTex to at most 1500 dTex.

4. The slit film, tape or monofilament according to any one of statements 1-3, wherein said metallocene-catalyzed polyethylene composition has a density of at least 0.910 g/cm$^3$ to at most 0.945 g/cm$^3$, as measured according to ISO 1183-2:2004 at a temperature of 23 °C, and preferably at least 0.915 g/cm$^3$ to at most 0.940 g/cm$^3$, preferably at least 0.918 g/cm$^3$ to at most 0.937 g/cm$^3$, preferably at least 0.920 g/cm$^3$ to at most 0.935 g/cm$^3$.

5. The slit film, tape or monofilament according to any one of statements 1 - 4, wherein said metallocene-catalyzed polyethylene composition has a melt index MI2 as measured according to ISO 1133: 2011 Procedure B at a temperature of 190 °C and a load of 2.16 kg of at least 0.2 g/10 min to at most 5.0 g/10 min, preferably at least 0.3 g/10 min to at most 2.5 g/10 min, preferably 0.4 g/10 min to at most 1.0 g/10 min.

6. The slit film, tape or monofilament according to any of statements 1-5, wherein said metallocene-catalyzed polyethylene composition has a molecular weight distribution $M_w/M_n$ of at least 2.8 to at most 6.0, for example at most 5.0, for example at most 4.0, for example of at least 2.5 to at most 4.0, as measured using gel permeation chromatography, with $M_w$ being the weight-average molecular weight and $M_n$ being the number-average molecular weight.

7. The slit film, tape or monofilament according to any of statements 1-6, wherein said metallocene-catalyzed polyethylene composition has a multimodal molecular weight distribution, preferably wherein said metallocene-catalyzed polyethylene composition has a bimodal molecular weight distribution.

8. A slit film, tape or monofilament comprising at least 70% by weight based on the total weight of the slit film, tape or monofilament of a metallocene-catalyzed polyethylene composition having a density of at least 0.910 g/cm$^3$ to at most 0.945 g/cm$^3$, as measured according to ISO 1183-2:2004 at a temperature of 23 °C; and a melt index MI2 of at least 0.2 g/10 min to at most 1.5 g/10 min, as measured according to ISO 1133:2011 Procedure B at a temperature of 190 °C and a load of 2.16 kg; and a molecular weight distribution $M_w/M_n$ of at least 2.8 to at most

6.0, as measured using gel permeation chromatography, with $M_w$ being the weight-average molecular weight and $M_n$ being the number-average molecular weight, wherein said metallocene-catalyzed polyethylene B has a multimodal molecular weight distribution, preferably a bimodal molecular weight distribution; and wherein said slit film, tape or monofilament has a titer from at least 100 dTex to at most 1500 dTex.

9. The slit film, tape or monofilament according to statement 8, wherein said metallocene-catalyzed polyethylene composition comprises:

a) at least 45% to at most 75% by weight based on the total weight of the metallocene-catalyzed polyethylene composition of a metallocene-catalyzed polyethylene A,
wherein said metallocene-catalyzed polyethylene A has
a density of at most 0.918 g/cm$^3$, as measured according to ISO 1183-2:2004 at a temperature of 23 °C; and
a melt index MI2 of at most 4.0 g/10 min, as measured according to ISO 1133:2011 Procedure B at a temperature of 190 °C and a load of 2.16 kg; and

b) at least 25% to at most 55% by weight based on the total weight of the metallocene-catalyzed polyethylene composition of a metallocene-catalyzed polyethylene B;
wherein said metallocene-catalyzed polyethylene B has
a density as measured according to ISO 1183-2:2004 at a temperature of 23 °C which is higher than the density of said metallocene-catalyzed polyethylene A; and
a melt index MI2 as measured according to ISO 1133:2011 Procedure B at a temperature of 190 °C and a load of 2.16 kg which is higher than the melt index MI2 said metallocene-catalyzed polyethylene A.

10. The slit film, tape or monofilament according to any one of statements 1-9, having a titer of at least 150 dTex to at most 1200 dTex, for example from at least 200 dTex to at most 1000 dTex, for example from at least 200 dTex to at most 800 dTex, for example from at least 200 dTex to at most 700 dTex, for example from at least 200 dTex to at most 600 dTex, for example from at least 200 dTex to at most 500 dTex, for example from at least 250 dTex to at most 600 dTex, for example from at least 300 dTex to at most 600 dTex, for example from at least 250 dTex to at most 500 dTex, for example from at least 300 dTex to at most 500 dTex, for example from at least 350 dTex to at most 470 dTex

11. The slit film, tape or monofilament according to any one of statements 1-10, comprising at least 80% by weight, preferably at least 90% by weight, preferably at least 93% by weight, preferably at least 95% by weight, preferably at least 97% by weight, preferably at least 99% by weight of the metallocene-catalyzed polyethylene composition.

12. The slit film, tape or monofilament according to any one of statements 1-11, comprising at least 80% to at most 100% by weight, preferably at least 90% to at most 100% by weight, preferably at least 93% to at most 100% by weight, preferably at least 95% to at most 100% by weight, preferably at least 97% to at most 100% by weight, preferably at least 99% to at most 100% by weight of the metallocene-catalyzed polyethylene composition.

13. The slit film, tape or monofilament according to any one of statements 1-12, wherein said metallocene-catalyzed polyethylene A and/or said metallocene-catalyzed polyethylene B is an ethylene copolymer.

14. The slit film, tape or monofilament according to any one of statements 1-13 wherein said metallocene-catalyzed polyethylene composition has a total comonomer content of at most 30% by weight, preferably of at most 20% by weight, preferably of at most 15% by weight, preferably of at most 10% by weight, preferably of at most 5% by weight, as measured according to $^{13}C$ NMR, wherein % by weight is based on the total weight of said metallocene-catalyzed polyethylene composition.

15. The slit film, tape or monofilament according to any one of statements 1-14, wherein said comonomer comprised in said metallocene-catalyzed polyethylene composition is a $C_3$-$C_{12}$ alpha-olefin, preferably wherein the $C_3$-$C_{12}$ alpha-olefin is selected from the group comprising propylene, 1-butene, 1-hexene, 4-methyl-1-pentene, 3-methyl-1-butene, and 1-octene, most preferably wherein the $C_3$-$C_{12}$alpha-olefin is 1-hexene.

16. The slit film, tape or monofilament according to any one of statements 1-15, wherein said metallocene-catalyzed polyethylene composition comprises at least 48% to at most 70% by weight of said metallocene-catalyzed polyethylene A, preferably at least 49% to at most 65% by weight, preferably at least 50% to at most 60% by weight, preferably at least 52% to at most 60% by weight, preferably at least 53% to at most 60% by weight, preferably at

least 55% to at most 60% by weight of said metallocene-catalyzed polyethylene A, wherein % by weight is based on the total weight of said metallocene-catalyzed polyethylene composition.

17. The slit film, tape or monofilament according to any one of statements 1-16, wherein said metallocene-catalyzed polyethylene composition comprises at least 30% to at most 52% by weight of said metallocene-catalyzed polyethylene B, preferably at least 35% to at most 48% by weight, preferably at least 35% to at most 51%, preferably at least 38% to at most 45% by weight of said metallocene-catalyzed polyethylene B, based on the total weight of said metallocene-catalyzed polyethylene composition.

18. The slit film, tape or monofilament according to any one of statements 1-17, wherein said metallocene-catalyzed polyethylene composition is at least partially formed by physical and/or chemical blending of said metallocene-catalyzed polyethylene A and said metallocene-catalyzed polyethylene B.

19. The slit film, tape or monofilament according to any one of statements 1-18, wherein said metallocene-catalyzed polyethylene A has a melt index MI2 of at least 0.01 g/10 min, preferably of at least 0.02 g/10 min, as measured according to ISO 1133:2011 Procedure B at a temperature of 190 °C and a load of 2.16 kg.

20. The slit film, tape or monofilament according to any one of statements 1-19, wherein said metallocene-catalyzed polyethylene A has a melt index MI2 of at most 3.0 g/10 min, preferably at most 2.0 g/10 min, preferably at most 1.50 g/10 minas measured according to ISO 1133: 2011 Procedure B at a temperature of 190 °C and a load of 2.16 kg.

21. The slit film, tape or monofilament according to any one of statements 1-20, wherein said metallocene-catalyzed polyethylene A has a melt index MI2 of at least 0.01 g/10 min, and preferably of at most 1.50 g/10 min as measured according to ISO 1133:2011 Procedure B at a temperature of 190 °C and a load of 2.16 kg.

22. The slit film, tape or monofilament according to any one of statements 1-21 wherein said metallocene-catalyzed polyethylene A has a density as measured according to ISO 1183-2:2004 at a temperature of 23 °C of at least 0.905 g/cm$^3$, preferably of at least 0.908 g/cm$^3$, preferably of at least 0.909 g/cm$^3$, and preferably of at most 0.918 g/cm$^3$.

23. The slit film, tape or monofilament according to any one of statements 1-22, wherein said metallocene-catalyzed polyethylene A has a monomodal molecular weight distribution.

24. The slit film, tape or monofilament according to any one of statements 1-23, wherein said metallocene-catalyzed polyethylene A is an ethylene copolymer with a $C_3$-$C_{12}$ alpha-olefin comonomer, preferably wherein the $C_3$-$C_{12}$ alpha-olefin is selected from the group comprising propylene, 1-butene, 1-hexene, 4-methyl-1-pentene, 3-methyl-1-butene, and 1-octene, most preferably wherein the $C_3$-$C_{12}$ alpha-olefin is 1-hexene.

25. The slit film, tape or monofilament according to any one of statements 1-24, wherein said metallocene-catalyzed polyethylene B has a MI2 of at least 0.5 g/10 min, preferably at least 0.8 g/10 min, preferably at least 1 g/10 min, more preferably at least 5 g/10 min, preferably at least 10 g/10 min, preferably at least 15 g/10 min, as measured according to ISO 1133:2011 Procedure B at a temperature of 190 °C and a load of 2.16 kg.

26. The slit film, tape or monofilament according to any one of statements 1-25, wherein said metallocene-catalyzed polyethylene B has a MI2 of at most 200 g/10 min, preferably at most 150 g/10 min, preferably at most 100 g/10 min, preferably at most 75 g/10 min, preferably at most 50 g/10 min, for example at least 5 g/10 min to at most 150 g/10 min, for example at least 10 g/10 min to at most 100 g/10 min, for example at least 10 g/10 min to at most 50 g/10 min as measured according to ISO 1133:2011 Procedure B at a temperature of 190 °C and a load of 2.16 kg.

27. The slit film, tape or monofilament according to any one of statements 1-26, wherein said metallocene-catalyzed polyethylene B has a melt index MI2 of at least 0.5 g/10 min to at most 200 g/10 min as measured according to ISO 1133:2011 Procedure B at a temperature of 190 °C and a load of 2.16 kg.

28. The slit film, tape or monofilament according to any one of statements 1-27, wherein said metallocene-catalyzed polyethylene B has a density of at least 0.920 g/cm$^3$, preferably at least 0.923 g/cm$^3$, preferably at least 0.925 g/cm$^3$, for example at least 0.926 g/cm$^3$, preferably of at least 0.927 g/cm$^3$, preferably of at least 0.928 g/cm$^3$, preferably of at least 0.930 g/cm$^3$, preferably of at most 0.962 g/cm$^3$, preferably of at most 0.960 g/cm$^3$; preferably of 0.927 g/cm$^3$ to 0.958 g/ cm$^3$, as measured according to ISO 1183-2:2004 at a temperature of 23 °C.

29. The slit film, tape or monofilament according to any one of statements 1-28, wherein said metallocene-catalyzed polyethylene B has a density of at least 0.920 g/cm$^3$, and preferably of at most 0.962 g/cm$^3$, as measured according to ISO 1183-2:2004 at a temperature of 23 °C.

30. The slit film, tape or monofilament according to any one of statements 1-29, wherein said metallocene-catalyzed polyethylene B has a monomodal molecular weight distribution.

31. The slit film, tape or monofilament according to any one of statements 1-30, wherein said metallocene-catalyzed polyethylene B is an ethylene homopolymer.

32. The slit film, tape or monofilament according to any one of statements 1-31, wherein said slit film, tape or monofilament comprises from 0% to at most 30% by weight, preferably from at least 0.005% to at most 30% by weight, preferably from at least 0.005% to at most 25% by weight, preferably from at least 0.010% to at most 20% by weight, preferably from at least 0.10% to at most 15% by weight preferably from at least 1.0% to at most 10% by weight of one or more additives preferably selected from the group comprising antioxidants, UV stabilizers, pigments, processing aids, acid scavengers, lubricants, antistatic agents, fillers, nucleating agents, and clarifying agents; preferably $CaCO_3$ or talcum.

33. The slit film, tape or monofilament according to any one of statements 1-32, wherein said slit film, tape or monofilament shows anisotropy in strength along the two principal directions, being the longitudinal direction and the transverse direction.

34. The slit film, tape or monofilament according to any one of statements 1-33, wherein the slit film, tape or monofilament is stretched

35. A process for manufacturing a slit film, tape or monofilament according to any one of statements 1 to 34, comprising the steps of:

a) providing a metallocene-catalyzed polyethylene composition preferably as defined in any one of the statements 1 to 31; and

b) forming the polyethylene composition of step a) into slit films, tapes or monofilaments; preferably into slit films, tapes or monofilaments having a titer from at least 100 dTex to at most 1500 dTex.

36. A process for manufacturing a slit film, tape according to any one of statements 1 to 34, comprising the steps of:

a) providing a metallocene-catalyzed polyethylene composition preferably as defined in any one of the statements 1 to 31;

b) forming the polyethylene composition of step a) into a film; and

c) slitting the film of step b) into slit film, tape; preferably wherein said film is slit in slit film, tape has a titer from at least 100 dTex to at most 1500 dTex.

37. Process for manufacturing a slit film, or tape according to any one of statements 1 to 34, comprising the steps of:

- providing a metallocene-catalyzed polyethylene composition preferably as defined in any one of the statements 1 to 31, to an extruder; and
- extruding the metallocene-catalyzed polyethylene composition through a die to form an extruded film (preferably having a thickness equal or less than 250 μm) or an extruded sheet (preferably having a thickness greater than 250 μm);
- solidifying the film or sheet, preferably by contacting said film or sheet to a cooled surface, for example by contacting it with a chilled roll, or by guiding it through a water bath;
- slitting said solidified film or sheet into slit films or tapes;

- drawing said slit films or tapes in the longitudinal or machine direction (preferably at a temperature of at least 50°C and at most 130°C and at a draw ratio of preferably at least 3), to obtain slit films or tapes having a titer of at least 100 dTex to at most 1500 dTex; optionally annealing the slit films or tape, preferably in an annealing oven.

38. Process for manufacturing a tape or monofilament according to any one of statements 1 to 34, comprising the steps of:

- providing a metallocene-catalyzed polyethylene composition preferably as defined in any one of the statements 1 to 31, to an extruder; and

- extruding the metallocene-catalyzed polyethylene composition through a plurality of die openings to form tapes or monofilaments;

- drawing said tapes or monofilaments in the longitudinal or machine direction preferably at a temperature of at least 50°C and at most 130°C and at a draw ratio of preferably at least 3, to obtain tapes or monofilaments having a titer of at least 100 dTex to at most 1500 dTex; optionally annealing the tapes or monofilaments, preferably in an annealing oven.

39. Process according to any one of statements 35 to 38, wherein said metallocene-catalyzed polyethylene composition is prepared in a process comprising the steps of:

i) providing a metallocene-catalyzed polyethylene A;

ii) providing a metallocene-catalyzed polyethylene B;

iii) blending said metallocene-catalyzed polyethylene A and said metallocene-catalyzed polyethylene B into said metallocene-catalyzed polyethylene composition.

40. Process according to statement 39, wherein said blending is performed through physically blending the metallocene-catalyzed polyethylene A and B, for example through melt blending.

41. Process according to any one of statements 35 to 38, wherein said metallocene-catalyzed polyethylene composition is prepared in a process comprising the steps of:

- preparing a metallocene-catalyzed polyethylene B;

- preparing a metallocene-catalyzed polyethylene A in the presence of said metallocene-catalyzed polyethylene B; thereby obtaining said metallocene-catalyzed polyethylene composition.

42. Process according to any one of statements 35 to 38, wherein said metallocene-catalyzed polyethylene composition is prepared in a process comprising the steps of:

- preparing a metallocene-catalyzed polyethylene A;
- preparing a metallocene-catalyzed polyethylene B in the presence of said metallocene-catalyzed polyethylene A; thereby obtaining said metallocene-catalyzed polyethylene composition.

43. Process according to any one of statements 35 to 39 or 41-42, wherein said metallocene-catalyzed polyethylene composition is prepared by chemically blending, for example by polymerizing the polyethylene in one or more reactors, preferably in at least two reactors connected in series.

44. Process according to any one of statements 35 to 39 or 41-42, wherein said metallocene-catalyzed polyethylene A and said metallocene-catalyzed polyethylene B are prepared in two separate reactors, preferably connected in series.

45. Process according to any one of statements 35 to 44, wherein the forming of the polyethylene composition into a film is done by cast blowing said polyethylene composition.

46. Process according to any one of statements 35 to 45, wherein the forming of the polyethylene composition into said film is done by extrusion of the polyethylene composition, such as cast flat extrusion, tubular extrusion or tubular blown extrusion.

47. Process according to any one of statements 35 to 46, wherein said slit film, or tape is stretched after slitting.

48. Process according to any one of statements 35 to 47, comprising the step of annealing the slit films or tapes.

49. An article, comprising a slit film, tape or monofilament according to any one of statements 1 to 34 or produced by a process according to any one of statements 35 to 48.

50. The article according to statement 49, wherein said article is woven fabric of slit film, tape or monofilament according to any one of statements 1 to 34 or produced by a process according to any one of statements 35 to 48.

51. A fabric, comprising slit films, tapes, or monofilaments, said slit films, tapes, or monofilaments comprising at least 70% by weight of a metallocene-catalyzed polyethylene composition, based on the total weight of the slit films, tapes or monofilaments;
wherein said metallocene-catalyzed polyethylene composition comprises:

a) at least 45% to at most 75% by weight based on the total weight of the metallocene-catalyzed polyethylene composition of a metallocene-catalyzed polyethylene A, wherein said metallocene-catalyzed polyethylene A has

- a density of at most 0.918 g/cm$^3$, as measured according to ISO 1183-2:2004 at a temperature of 23 °C; and

- a melt index MI2 of at most 4.0 g/10 min, as measured according to ISO 1133:2011 Procedure B at a temperature of 190 °C and a load of 2.16 kg; and

b) at least 25% to at most 55% by weight based on the total weight of the metallocene-catalyzed polyethylene composition of a metallocene-catalyzed polyethylene B;
wherein said metallocene-catalyzed polyethylene B has

- a density as measured according to ISO 1183-2:2004 at a temperature of 23 °C which is higher than the density of said metallocene-catalyzed polyethylene A; and

- a melt index MI2 as measured according to ISO 1133:2011 Procedure B at a temperature of 190 °C and a load of 2.16 kg which is higher than the melt index MI2 said metallocene-catalyzed polyethylene A.

52. The fabric of statement 51, wherein said slit films, tapes, or monofilaments are slit films, tapes, or monofilaments according to any one of statements 1 to 34 or produced by a process according to any one of statements 35 to 48.

53. The fabric according to statement 51 or statement 52, said slit films, tapes or monofilaments have a titer of at least 100 dTex to at most 1500 dTex.

54. The fabric according to any one of statements 51 to 53, said fabric is a woven fabric or a nonwoven fabric, preferably a woven fabric.

55. A backing for tufted carpets or artificial grass, comprising a fabric according to any one of statements 51 to 54.

56. The backing according to statement 55, wherein the fabric according to any one of statements 51 to 54 is a primary backing.

57. The backing according to statement 55 or statement 56, comprising at least one secondary backing.

58. Use of a slit film, tape or monofilament according to any one of statements 1 to 34, or produced by a process according to any one of statements 35 to 48 to prepare an article, preferably a woven fabric.

59. Use of an article, such as a woven fabric, according to any one of statements 49 to 54, as a backing material, preferably as a backing material in carpets, more preferably in tufted carpets and most preferably in artificial turfs.

60. Use of an article, according to any one of statements 49 to 54, as industrial-type bags, sacks or wraps; ropes or cordage; artificial turf or geotextiles.

61. An artificial turf comprising a slit film, tape or monofilament according to any one of statements 1 to 34, or produced by any one of statements 35 to 48, preferably wherein said slit film, tape or monofilament is used for the backing of said turf, preferably the primary backing of said artificial turf.

62. An artificial turf comprising a backing according to any one of statements 55 to 57.

63. The artificial turf according to statement 61 or statement 62, comprising grass yarns.

64. The artificial turf according to any one of statement 61 to 63, comprising grass yarns, wherein the grass yarns comprise a polyethylene, preferably at least 70 % by weight, preferably at least 80% by weight, preferably at least 90% by weight, preferably at least 93% by weight, preferably at least 95% by weight, preferably at least 97% by weight, preferably at least 99% by weight of a polyethylene.

65. The artificial turf according to anyone of statements 61 to 64, comprising grass yarns, wherein the grass yarns comprise a metallocene-catalyzed polyethylene, preferably at least 70 % by weight, preferably at least 80% by weight, preferably at least 90% by weight, preferably at least 93% by weight, preferably at least 95% by weight, preferably at least 97% by weight, preferably at least 99% by weight of a metallocene-catalyzed polyethylene.

66. The artificial turf according to anyone of statements 61 to 65, comprising grass yarns, wherein the grass yarns comprise the metallocene-catalyzed polyethylene composition, preferably at least 70 % by weight, preferably at least 80% by weight, preferably at least 90% by weight, preferably at least 93% by weight, preferably at least 95% by weight, preferably at least 97% by weight, preferably at least 99% by weight of the metallocene-catalyzed polyethylene composition.

67. The artificial turf according to any one of statements 61 to 66, wherein the at least one backing comprise a primary backing.

68. The artificial turf according to any one of statements 61 to 67, wherein the at least one backing comprise a primary backing and a secondary backing.

69. The artificial turf according to any one of statements 61 to 68, wherein the grass yarns are stitched, woven, knotted into the at least one backing, preferably the primary backing

70. The artificial turf according any one of statements 61 to 69, wherein the at least one backing, preferably the primary backing comprises of slit films or a tape according to any one of statements 1 to 34.

71. The artificial turf according any one of statements 61 to 70, comprising a secondary backing, preferably does the secondary backing comprise a latex, preferably a polyolefin, preferably a polyethylene or a polyethylene copolymer.

72. A process for manufacturing an artificial turf according to any one of statements 61 to 71, comprising the steps of:

- forming at least one backing using a slit films, tapes, or monofilaments, said slit films, tapes or monofilaments comprising at least 70% by weight of a metallocene-catalyzed polyethylene composition based on the total weight of the slit film, tape or monofilament; wherein said metallocene-catalyzed polyethylene composition comprises:

  a) at least 45% to at most 75% by weight based on the total weight of the metallocene-catalyzed polyethylene composition of a metallocene-catalyzed polyethylene A, wherein said metallocene-catalyzed polyethylene A has

  - a density of at most 0.918 g/cm$^3$, as measured according to ISO 1183-2:2004 at a temperature of 23 °C; and

  - a melt index MI2 of at most 4.0 g/10 min, as measured according to ISO 1133:2011 Procedure B at a

temperature of 190 °C and a load of 2.16 kg; and

b) at least 25% to at most 55% by weight based on the total weight of the metallocene-catalyzed polyethylene composition of a metallocene-catalyzed polyethylene B; wherein said metallocene-catalyzed polyethylene B has

- a density as measured according to ISO 1183-2:2004 at a temperature of 23 °C which is higher than the density of said metallocene-catalyzed polyethylene A; and

- a melt index MI2 as measured according to ISO 1133:2011 Procedure B at a temperature of 190 °C and a load of 2.16 kg which is higher than the melt index MI2 said metallocene-catalyzed polyethylene A;

- and using said at least one backing for preparing the artificial turf.

73. The process according to statement 72, further comprising the step of:

- attaching grass yarns to the at least one backing, preferably wherein the grass yarns comprise a polyethylene, preferably at least 70 % by weight, preferably at least 80% by weight, preferably at least 90% by weight, preferably at least 93% by weight, preferably at least 95% by weight, preferably at least 97% by weight, preferably at least 99% by weight of a polyethylene.

74. The process according to statement 72 or 73, further comprising the step of applying a secondary backing.

75. The process according to any one of statements 72 to 74, wherein the at least one backing comprises slit films, tapes or monofilaments according to any one of statements 1 to 34 or wherein the at least one backing is a backing according to any one of statements 55 to 57.

Throughout the present application the terms "polyethylene" and "polyethylene polymer" may be used synonymously.

The term "slit film, tape or monofilament" as used herein is well known in the art and intends to refer to a tape that has certain specified dimensions of thickness and width. Throughout the present application the term "slit film", "tape" or "monofilament" intends to refer to an unidirectional oriented polymer product, preferably with a titer of at least 100 dTex to at most 1500 dTex, preferably at least 100 dTex to at most 1250 dTex, preferably at least 100 dtex to at most 1000 dTex, preferably at least 100 dTex to at most 900 dTex, preferably at least 100 dTex to at most 800 dTex, preferably at least 100 dTex to at most 700 dTex, preferably at least 100 dTex to at most 600 dTex. The dtex is a measure of weight per length of tape (g/10000 m), and can be measured by standard weighing and measuring tools known in the art. In some embodiments "tapes" and "slit films" may have a rectangular or square cross section, whereas "monofilaments" may preferably have a more complex cross section, such as round, oblong, oval, triangular, star-shaped, ....

It is to be understood that the slit films, tapes and monofilaments could also be used in a backing, preferably a primary backing for a tufted carpet.

For the backing of an artificial turf, one has to find the right compromise between strength, flexibility creep resistance, etc.

In some embodiments, when the titer is too high, too high friction and/or dust formation may occur during weaving of the slit film, tapes or monofilaments, in particular during weaving of the slit film, tapes or monofilaments into a backing for an artificial turf. When said backing, comprising slit film, tapes and monofilaments with a too high titer, is used to produce an artificial turf, during the tufting step, the backing may be too ridged, causing problems with exact positioning and orientation of the grass yarns. This ultimately may lead to streak formation in the final artificial turf. A too high titer may also lead to less flexibility in terms of stitches, especially when the slit films, tapes and monofilaments are too broad.

When the titer is too low, the slit films, tapes or monofilaments may not be able to withstand the weaving step and the tufting step needed to make an artificial turf. The slit films, tapes or monofilaments may break or deform, which ultimately may lead to streaks and defect in the artificial turf. A too low titer, may also not be able to provide the required dimensional stability, especially the creep resistance, for the artificial turf. A primary backing made from slit films, tapes or monofilaments with a too low titer, may not offer the required thermal resistance when applying a secondary backing, such as an oven dried latex or preferably a coating of polyolefin extruded on the primary backing.

In a preferred embodiment, a slit film, tape or monofilament is provided with a draw ratio of at least 2, preferably at least 3, preferably at least 5, preferably at least 10, preferably at least 12.

Preferably, the slit film, tape or monofilament in accordance with the present invention shows anisotropy in

strength. The strength along the longitudinal or draw direction may be significantly higher, preferable at least 1.2 times higher, preferably at least 1.5 times higher, preferably at least 2.0 times higher, preferably at least 4.0 times higher, and preferably at least 10.0 times higher than the strength in the transverse direction.

According to the invention, slit film, tape or monofilament comprises at least 70% by weight of a metallocene-catalyzed polyethylene composition; said composition comprising at least two polyethylene:

a metallocene-catalyzed polyethylene A having

a density of at most 0.918 g/cm$^3$, as measured according to ISO 1183-2:2004 at a temperature of 23 °C; and

a melt index MI2 of at most 4.0 g/10 min, as measured according to ISO 1133:2011 Procedure B at a temperature of 190 °C and a load of 2.16 kg; and

a metallocene-catalyzed polyethylene B having
a density as measured according to ISO 1183-2:2004 at a temperature of 23 °C which is higher than the density of said metallocene-catalyzed polyethylene A; and a melt index MI2 as measured according to ISO 1133:2011 Procedure B at a temperature of 190 °C and a load of 2.16 kg which is higher than the melt index MI2 said metallocene-catalyzed polyethylene A.

Throughout the present application when densities are given for the metallocene-catalyzed polyethylene composition, this density is measured on pelletized metallocene-catalyzed polyethylene composition unless otherwise stated. When densities are given for the metallocene-catalyzed polyethylene B, the density is measured on fluff, unless otherwise stated. When densities are given for the metallocene-catalyzed polyethylene A, said density is measured on fluff if it is possible to obtain separate fluff. When the metallocene-catalyzed polyethylene A and the metallocene-catalyzed polyethylene B are already mixed, then the density of the metallocene-catalyzed polyethylene A is calculated from the measured density of the metallocene-catalyzed polyethylene composition and the measured density of the metallocene-catalyzed polyethylene B, unless otherwise stated.

The term "polyethylene resin" or "polyethylene composition" as used herein refers to the polyethylene fluff or powder that is extruded, and/or melted, and/or pelletized and can be prepared through compounding and homogenizing of the polyethylene resin as taught herein, for instance, with mixing and/or extruder equipment. Unless otherwise stated, all parameters used to define the polyethylene composition or one of the polyethylene fractions thereof, are as measured on polyethylene pellets.

The term "fluff" or "powder" as used herein refers to the polyethylene material with the solid catalyst particle at the core of each grain and is defined as the polymer material after it exits the polymerization reactor (or final polymerization reactor in the case of multiple reactors connected in series).

The term "pellets" refers to the polyethylene resin that has been pelletized, for example through melt extrusion. As used herein, the terms "extrusion" or "extrusion process", "pelletization" or "pelletizing" are used herein as synonyms and refer to the process of transforming polyolefin resin into a "polyolefin product" or into "pellets" after pelletizing. The process of pelletization preferably comprises several devices connected in series, including one or more rotating screws in an extruder, a die, and means for cutting the extruded filaments into pellets.

A metallocene-catalyzed polyethylene for use in the slit film, tape or monofilament as described herein can be produced by polymerizing ethylene and optionally one or more comonomers, and optionally hydrogen, in the presence of at least one metallocene catalyst system.

As used herein, the term "comonomer" refers to olefin comonomers which are suitable for being polymerized with alpha-olefin monomer. Comonomers may comprise but are not limited to aliphatic $C_3$-$C_{20}$ alpha-olefins, preferably $C_4$-$C_{12}$ alpha-olefins. Examples of suitable aliphatic $C_3$-$C_{20}$ alpha-olefins include propylene, 1-butene, 1-pentene, 4-methyl-1-pentene, 1-hexene, 1-octene, 1-decene, 1-dodecene, 1-tetradecene, 1-hexadecene, 1-octadecene, and 1-eicosene. In some preferred embodiments, said comonomer is 1-hexene.

The term "ethylene copolymer" as used herein is intended to encompass polymers which consist of repeat units deriving from ethylene and at least one other $C_3$-$C_{20}$ alpha olefin comonomer, preferably wherein the comonomer is 1-hexene.

The term "ethylene homopolymer" as used herein is intended to encompass polymers which consist essentially of repeat units deriving from ethylene. In this context, the term "essentially of" intends to refer to homopolymers which may, for example, comprise at least 99.8% preferably 99.9% by weight of repeats units derived from ethylene, as determined for example by $^{13}C$ NMR spectrometry.

As used herein, the term "monomodal polyethylene" or "polyethylene with a monomodal molecular weight distribution" refers to polyethylene having one maximum in their molecular weight distribution curve, which is also defined as a unimodal distribution curve. As used herein, the term "polyethylene with a bimodal molecular weight distribution"

or "bimodal polyethylene" it is meant, polyethylene having a distribution curve being the sum of two unimodal molecular weight distribution curves, and refers to a polyethylene product having two distinct but possibly overlapping populations of polyethylene macromolecules each having different weight average molecular weights. By the term "polyethylenes with a multimodal molecular weight distribution" or "multimodal polyethylenes" it is meant polyethylenes with a distribution curve being the sum of at least two, preferably more than two unimodal distribution curves, and refers to a polyethylene product having two or more distinct but possibly overlapping populations of polyethylene macromolecules each having different weight average molecular weights. The multimodal polyethylene can have an "apparent monomodal" molecular weight distribution, which is a molecular weight distribution curve with a single peak and no shoulder. Nevertheless, the polyethylene will still be multimodal if it comprises two distinct populations of polyethylene macromolecules each having a different weight average molecular weights, as defined above, for example when the two distinct populations were prepared in different reactors and/or under different conditions and/or with different catalysts.

Polyethylene having a multimodal molecular weight distribution can be obtained by chemical or physical blending of at least two polyethylene fractions having different molecular weight distribution. In some embodiments, polyethylene having multimodal molecular weight distribution can be obtained by blending at the polyethylene particle level wherein the different fractions of polyethylene can be obtained by operating two reactors under different polymerization conditions and transferring the first fraction to the second reactor, *i.e.* the reactors are connected in series. As used herein, the term "catalyst" refers to a substance that causes a change in the rate of a polymerization reaction. It is especially applicable to catalysts suitable for the polymerization of ethylene to polyethylene. The present invention especially concerns polyethylene prepared in the presence of a metallocene catalysts system. As used herein, the term "metallocene-catalyzed polyethylene" refers to a polyethylene prepared in the presence of a metallocene catalyst.

The term "metallocene catalyst" or "metallocene" for short is used herein to describe any transition metal complexes comprising metal atoms bonded to one or more ligands. The preferred metallocene catalysts are compounds of Group IV transition metals of the Periodic Table such as titanium, zirconium, hafnium, etc., and have a coordinated structure with a metal compound and ligands composed of one or two groups of cyclopentadienyl, indenyl, fluorenyl or their derivatives. The structure and geometry of the metallocene can be varied to adapt to the specific need of the producer depending on the desired polymer. Metallocenes typically comprise a single metal site, which allows for more control of branching and molecular weight distribution of the polymer. Monomers are inserted between the metal and the growing chain of polymer.

Preferably the metallocene catalyst system used for preparing said metallocene-catalyzed polyethylene composition, said metallocene-catalyzed polyethylene A and said metallocene-catalyzed polyethylene B, comprises a compound of formula (I) or (II)

$$(Ar)_2MQ_2 \qquad (I);$$

or

$$R''(Ar)_2MQ_2 \qquad (II),$$

wherein the metallocenes according to formula (I) are non-bridged metallocenes and the metallocenes according to formula (II) are bridged metallocenes;

wherein said metallocene according to formula (I) or (II) has two Ar bound to M which can be the same or different from each other;

wherein Ar is an aromatic ring, group or moiety and wherein each Ar is independently selected from the group consisting of cyclopentadienyl, indenyl (IND), tetrahydroindenyl (THI), and fluorenyl, wherein each of said groups may be optionally substituted with one or more substituents each independently selected from the group consisting of halogen, hydrosilyl, a hydrocarbyl having 1 to 20 carbon atoms, and $SiR'''_3$ wherein R''' is a hydrocarbyl having 1 to 20 carbon atoms; and wherein said hydrocarbyl optionally contains one or more atoms selected from the group comprising B, Si, S, O, F, Cl, and P;

wherein M is a transition metal selected from the group consisting of titanium, zirconium, hafnium, and vanadium; and preferably M is zirconium;

wherein each Q is independently selected from the group consisting of halogen, a hydrocarboxy having 1 to 20 carbon atoms, and a hydrocarbyl having 1 to 20 carbon atoms and wherein said hydrocarbyl optionally contains one or more atoms selected from the group comprising B, Si, S, O, F, Cl, and P; and

wherein R" is a divalent group or moiety bridging the two Ar groups and selected from the group consisting of $C_1$-$C_{20}$ alkylene, germanium, silicon, siloxane, alkylphosphine, and an amine, and wherein said R" is optionally substituted with one or more substituents each independently selected from the group consisting of halogen, hydrosilyl, a hydrocarbyl having 1 to 20 carbon atoms, and $SiR_3$ wherein R is a hydrocarbyl having 1 to 20 carbon atoms; and wherein said hydrocarbyl optionally contains one or more atoms selected from the group comprising B, Si, S, O, F, Cl, and P.

Preferably, the metallocene comprises a bridged bis-indenyl and/or a bridged bis-tetrahydrogenated indenyl component. In an embodiment, the metallocene can be selected from one of the following formula (IIIa) or (IIIb):

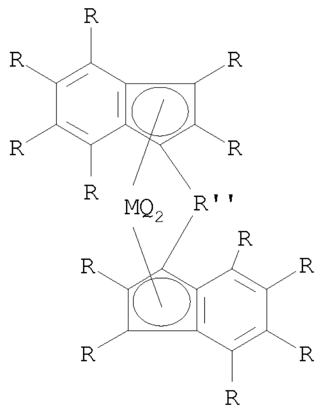

(IIIa)

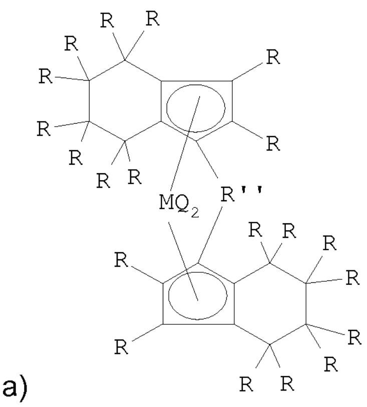

(IIIb)

wherein each R in formula (IIIa) or (IIIb) is the same or different and is selected independently from hydrogen or $XR'_v$ in which X is chosen from Group 14 of the Periodic Table (preferably carbon), oxygen or nitrogen and each R' is the same or different and is chosen from hydrogen or a hydrocarbyl of from 1 to 20 carbon atoms and v+1 is the valence of X, preferably R is a hydrogen, methyl, ethyl, n-propyl, iso-propyl, n-butyl, tert-butyl group; R" is a structural bridge between the two indenyl or tetrahydrogenated indenyls that comprises a C1-C4 alkylene radical, a dialkyl germanium, silicon or siloxane, or an alkyl phosphine or amine radical; Q is a hydrocarbyl radical having from 1 to 20 carbon atoms or a halogen, preferably Q is F, Cl or Br; and M is a transition metal from Group 4 of the Periodic Table or vanadium.

Each indenyl or tetrahydro indenyl component may be substituted with R in the same way or differently from one another at one or more positions of either of the fused rings. Each substituent is independently chosen. If the cyclopentadienyl ring is substituted, its substituent groups are preferably not so bulky so as to affect coordination of the olefin monomer to the metal M. Any substituents XR'v on the cyclopentadienyl ring are preferably methyl. More preferably, at least one and most preferably both cyclopentadienyl rings are unsubstituted. In a particularly preferred embodiment, the metallocene comprises a bridged unsubstituted bis-indenyl and/or bis-tetrahydrogenated indenyl i.e. all Rare hydrogens. More preferably, the metallocene comprises a bridged unsubstituted bis-tetrahydrogenated indenyl.

Illustrative examples of metallocene catalysts comprise but are not limited to bis(cyclopentadienyl) zirconium dichloride ($Cp_2ZrCl_2$), bis(cyclopentadienyl) titanium dichloride ($Cp_2TiCl_2$), bis(cyclopentadienyl) hafnium dichloride ($Cp_2HfCl_2$); bis(tetrahydroindenyl) zirconium dichloride, bis(indenyl) zirconium dichloride, and bis(n-butyl-cyclopentadienyl) zirconium dichloride; ethylenebis(4,5,6,7-tetrahydro-1-indenyl) zirconium dichloride, ethylenebis(1-indenyl) zirconium dichloride, dimethylsilylene bis(2-methyl-4-phenyl-inden-1-yl) zirconium dichloride, diphenylmethylene (cyclopentadienyl)(fluoren-9-yl) zirconium dichloride, and dimethylmethylene [1-(4-tert-butyl-2-methyl-cyclopentadienyl)](fluoren-9-yl) zirconium dichloride. Most preferably the metallocene is ethylene-bis(tetrahydroindenyl)zirconium dichloride or ethylene-bis(tetrahydroindenyl) zirconium difluoride.

As used herein, the term "hydrocarbyl having 1 to 20 carbon atoms" refers to a moiety selected from the group comprising a linear or branched C1-C20 alkyl; $C_3$-$C_{20}$ cycloalkyl; $C_6$-$C_{20}$ aryl; $C_7$-$C_{20}$ alkylaryl and $C_7$-$C_{20}$ arylalkyl, or any combinations thereof. Exemplary hydrocarbyl groups are methyl, ethyl, propyl, butyl, amyl, isoamyl, hexyl, isobutyl, heptyl, octyl, nonyl, decyl, cetyl, 2-ethylhexyl, and phenyl.

As used herein, the term "hydrocarboxy having 1 to 20 carbon atoms" refers to a moiety with the formula hydrocarbyl-O-, wherein the hydrocarbyl has 1 to 20 carbon atoms as described herein. Preferred hydrocarboxy groups are selected from the group comprising alkyloxy, alkenyloxy, cycloalkyloxy or aralkoxy groups.

As used herein, the term "alkyl", by itself or as part of another substituent, refers to straight or branched saturated hydrocarbon group joined by single carbon-carbon bonds having 1 or more carbon atom, for example 1 to 12 carbon atoms, for example 1 to 6 carbon atoms, for example 1 to 4 carbon atoms. When a subscript is used herein following a carbon atom, the subscript refers to the number of carbon atoms that the named group may contain. Thus, for example, $C_{1-12}$alkyl means an alkyl of 1 to 12 carbon atoms. Examples of alkyl groups are methyl, ethyl, propyl, isopropyl, butyl, isobutyl, sec-butyl, tert-butyl, 2-methylbutyl, pentyl and its chain isomers, hexyl and its chain isomers, heptyl and its chain isomers, octyl and its chain isomers, nonyl and its chain isomers, decyl and its chain isomers, undecyl and its chain isomers, dodecyl and its chain isomers. Alkyl groups have the general formula $C_nH_{2n+1}$.

As used herein, the term "cycloalkyl", by itself or as part of another substituent, refers to a saturated or partially saturated cyclic alkyl radical. Cycloalkyl groups have the general formula $C_nH_{2n-1}$. When a subscript is used herein following a carbon atom, the subscript refers to the number of carbon atoms that the named group may contain. Thus,

examples of $C_{3-6}$cycloalkyl include cyclopropyl, cyclobutyl, cyclopentyl, or cyclohexyl.

As used herein, the term "aryl", by itself or as part of another substituent, refers to a radical derived from an aromatic ring, such as phenyl, naphthyl, indanyl, or 1,2,3,4-tetrahydro-naphthyl. When a subscript is used herein following a carbon atom, the subscript refers to the number of carbon atoms that the named group may contain.

As used herein, the term "alkylaryl", by itself or as part of another substituent, refers to refers to an aryl group as defined herein, wherein a hydrogen atom is replaced by an alkyl as defined herein. When a subscript is used herein following a carbon atom, the subscript refers to the number of carbon atoms that the named group or subgroup may contain.

As used herein, the term "arylalkyl", by itself or as part of another substituent, refers to refers to an alkyl group as defined herein, wherein a hydrogen atom is replaced by an aryl as defined herein. When a subscript is used herein following a carbon atom, the subscript refers to the number of carbon atoms that the named group may contain. Examples of $C_{6-10}$aryl$C_{1-6}$alkyl radicals include benzyl, phenethyl, dibenzylmethyl, methylphenylmethyl, 3-(2-naphthyl)-butyl, and the like.

As used herein, the term "alkylene", by itself or as part of another substituent, refers to alkyl groups that are divalent, *i.e.* with two single bonds for attachment to two other groups. Alkylene groups may be linear or branched and may be substituted as indicated herein. Non-limiting examples of alkylene groups include methylene ($-CH_2-$), ethylene ($-CH_2-CH_2-$), methylmethylene ($-CH(CH_3)-$), 1-methyl-ethylene ($-CH(CH_3)-CH_2-$), n-propylene ($-CH_2-CH_2-CH_2-$), 2-methylpropylene ($-CH_2-CH(CH_3)-CH_2-$), 3-methylpropylene ($-CH_2-CH_2-CH(CH_3)-$), n-butylene ($-CH_2-CH_2-CH_2-CH_2-$), 2-methylbutylene ($-CH_2-CH(CH_3)-CH_2-CH_2-$), 4-methylbutylene ($-CH_2-CH_2-CH_2-CH(CH_3)-$), pentylene and its chain isomers, hexylene and its chain isomers, heptylene and its chain isomers, octylene and its chain isomers, nonylene and its chain isomers, decylene and its chain isomers, undecylene and its chain isomers, dodecylene and its chain isomers. When a subscript is used herein following a carbon atom, the subscript refers to the number of carbon atoms that the named group may contain. For example, $C_1$-$C_{20}$ alkylene refers to an alkylene having between 1 and 20 carbon atoms.

Exemplary halogen atoms include chlorine, bromine, fluorine and iodine, wherein fluorine and chlorine are preferred.

The metallocene catalysts used herein are preferably provided on a solid support. The support can be an inert organic or inorganic solid, which is chemically unreactive with any of the components of the conventional metallocene catalyst. Suitable support materials for the supported catalyst include solid inorganic oxides, such as silica, alumina, magnesium oxide, titanium oxide, thorium oxide, as well as mixed oxides of silica and one or more Group 2 or 13 metal oxides, such as silica-magnesia and silica-alumina mixed oxides. Silica, alumina, and mixed oxides of silica and one or more Group 2 or 13 metal oxides are preferred support materials. Preferred examples of such mixed oxides are the silica-aluminas. Most preferred is a silica compound. In a preferred embodiment, the metallocene catalyst is provided on a solid support, preferably a silica support. The silica may be in granular, agglomerated, fumed or other form.

In an embodiment, the support of the metallocene catalyst is a porous support, and preferably a porous silica support having a surface area comprised between 200 and 900 $m^2/g$. In another embodiment, the support of the polymerization catalyst is a porous support, and preferably a porous silica support having an average pore volume comprised between 0.5 and 4 ml/g. In yet another embodiment, the support of the polymerization catalyst is a porous support, preferably as described in US 2013/0211018 A1, hereby incorporated in its entirety by reference. In some embodiments, the support of the polymerization catalyst is a porous support, and preferably a porous silica support having an average pore diameter comprised between 50 and 300 Å, and preferably between 75 and 220 Å.

In some embodiments, the support has a D50 of at most 150 μm, preferably of at most 100 μm, preferably of at most 75 μm, preferably of at most 50 μm, preferably of at most 25 μm, preferably of at most 15 μm. The D50 is defined as the particle size for which fifty percent by weight of the particles has a size lower than the D50.

The measurement of the particle size can be made according to the International Standard ISO 13320:2009 ("Particle size analysis -Laser diffraction methods").

For example, the D50 can be measured by sieving, by BET surface measurement, or by laser diffraction analysis. For example, Malvern Instruments' laser diffraction systems may advantageously be used. The particle size may be measured by laser diffraction analysis on a Malvern type analyzer. The particle size may be measured by laser diffraction analysis on a Malvern type analyzer after having put the supported catalyst in suspension in cyclohexane. Suitable Malvern systems include the Malvern 2000, Malvern MasterSizer (such as Mastersizer S), Malvern 2600 and Malvern 3600 series. Such instruments together with their operating manual meet or even exceed the requirements set-out within the ISO 13320 Standard. The Malvern MasterSizer (such as Mastersizer S) may also be useful as it can more accurately measure the D50 towards the lower end of the range e.g. for average particle sizes of less 8 μm, by applying the theory of Mie, using appropriate optical means.

Preferably, the supported metallocene catalyst is activated. The cocatalyst, which activates the metallocene catalyst component, can be any cocatalyst known for this purpose such as an aluminum-containing cocatalyst, a boron-containing cocatalyst or a fluorinated catalyst. The aluminum-containing cocatalyst may comprise an alumoxane, an alkyl aluminum, a Lewis acid and/or a fluorinated catalytic support.

In an embodiment, alumoxane is used as an activating agent for the metallocene catalyst. The alumoxane can be used in conjunction with a catalyst in order to improve the activity of the catalyst during the polymerization reaction.

As used herein, the term "alumoxane" and "aluminoxane" are used interchangeably, and refer to a substance, which is capable of activating the metallocene catalyst. In an embodiment, alumoxanes comprise oligomeric linear and/or cyclic alkyl alumoxanes. In a further embodiment, the alumoxane has formula (IV) or (V)

$$R^a\text{-}(Al(R^a)\text{-}O)_x\text{-}AlR^a_2 \qquad (IV)$$

for oligomeric, linear alumoxanes; or

$$(\text{-}Al(R^a)\text{-}O\text{-})_y \qquad (V)$$

for oligomeric, cyclic alumoxanes

wherein x is 1-40, and preferably 10-20;

wherein y is 3-40, and preferably 3-20; and

wherein each $R^8$ is independently selected from a $C_1$-$C_8$alkyl, and preferably $R^8$ is methyl. In a preferred embodiment, the alumoxane is methylalumoxane (MAO).

In a preferred embodiment, the metallocene catalyst is a supported metallocene-alumoxane catalyst comprising a metallocene and an alumoxane which are bound on a porous silica support. Preferably, the metallocene catalyst is a bridged bis-indenyl catalyst and/or a bridged bis-tetrahydrogenated indenyl catalyst.

One or more aluminiumalkyl represented by the formula $AlR^b_x$ can be used as additional cocatalyst, wherein each $R^b$ is the same or different and is selected from halogens or from alkoxy or alkyl groups having from 1 to 12 carbon atoms and x is from 1 to 3. Non-limiting examples are Tri-Ethyl Aluminum (TEAL), Tri-Iso-Butyl Aluminum (TIBAL), Tri-Methyl Aluminum (TMA), and Methyl-Methyl-Ethyl Aluminum (MMEAL). Especially suitable are trialkylaluminums, the most preferred being triisobutylaluminum (TIBAL) and triethylaluminum (TEAL).

In some preferred embodiments, the metallocene catalyst used for the preparation of said metallocene-catalyzed polyethylene A is the same as the metallocene catalyst used for the preparation of said metallocene-catalyzed polyethylene B.

In some embodiments, the slit film, tape or monofilament comprises at least 75% to at most 100% by weight of the metallocene-catalyzed polyethylene composition; preferably wherein said metallocene-catalyzed polyethylene composition has a multimodal molecular weight distribution, wherein % by weight is based on the total weight of the slit film, or tape. Preferably said slit film, tape or monofilament comprises at least 78% to at most 100% by weight, preferably at least 82% to at most 100% by weight, preferably at least 87% to at most 100% by weight, preferably at least 95% to at most 100% by weight, preferably at least 97% to at most 100% by weight, preferably at least 99% to at most 100% by weight of the metallocene-catalyzed polyethylene composition. In some embodiments, the metallocene-catalyzed polyethylene composition for use in the slit film, tape or monofilament has a density, as measured according to ISO 1183-2:2004 at a temperature of 23 °C, of at least 0.910 g/cm$^3$ to at most 0.945 g/cm$^3$, preferably 0.916 g/cm$^3$ to at most 0.940 g/cm$^3$, preferably of at least 0.920 g/cm$^3$ to at most 0.940 g/cm$^3$, preferably of at least 0.925 g/cm$^3$ to at most 0.940 g/cm$^3$; preferably of at least 0.930 g/cm$^3$ to at most 0.940 g/cm$^3$.

In some embodiments, the metallocene-catalyzed polyethylene composition for use in the slit film, tape or monofilament has a melt index MI2, as measured according to ISO 1133:2011 Procedure B at a temperature of 190 °C and a load of 2.16 kg, of at least 0.2 g/10 min to at most 5.0 g/10 min, preferably at least 0.3 g/10 min to at most 2.5 g/10 min, preferably at least 0.2 g/10 min to at most 2.5 g/10 min, or preferably at least 0.4 g/10 min to at most 1.0 g/10 min.

In some preferred embodiments, the metallocene-catalyzed polyethylene composition has a molecular weight distribution $M_w/M_n$ of at least 2.8 to at most 6.0, for example at most 5.0, for example at most 4.5, for example of at least 2.8 to at most 4.0, as measured using gel permeation chromatography, with $M_w$ being the weight-average molecular weight and $M_n$ being the number-average molecular weight.

In some preferred embodiments, said metallocene-catalyzed polyethylene composition is an ethylene copolymer with a $C_3$-$C_{12}$ alpha-olefin comonomer. Preferably comonomer is a $C_4$-$C_{12}$ alpha-olefin selected from the group comprising 1-butene, 1-hexene, 4-methyl-1-pentene, 3-methyl-1-butene, and 1-octene, most preferably the $C_4$-$C_{12}$ alpha-olefin is 1-hexene. In some preferred embodiments, said metallocene-catalyzed polyethylene composition has a 1-hexene comonomer content of at most 10% by weight, preferably of at most 8% by weight, preferably of at most 6% by weight, preferably of at most 5% by weight, as measured according to NMR, based on the total weight of said metallocene-catalyzed polyethylene composition.

In some embodiments, the slit film, tape or monofilament provided herein comprises at least 70% to at most 100% by weight of the metallocene-catalyzed polyethylene composition, said metallocene-catalyzed polyethylene composition preferably having a multimodal molecular weight distribution, more preferably a bimodal molecular weight distribution, and comprising:

a) at least 45% to at most 75% by weight of a metallocene-catalyzed polyethylene A, wherein % by weight is based on the total weight of the metallocene-catalyzed polyethylene composition; and
b) at least 25% to at most 55% by weight of a metallocene-catalyzed polyethylene B, wherein % by weight is based on the total weight of the metallocene-catalyzed polyethylene composition.

Said metallocene-catalyzed polyethylene A can be obtained from the metallocene-catalyzed polyethylene composition by fractionating said metallocene-catalyzed polyethylene composition in two fractions with preparative Temperature Raising Elution Fraction (TREF). In some preferred embodiments, said metallocene-catalyzed polyethylene A may have a monomodal molecular weight distribution. The TREF can be performed on a TREF model 200 series instrument equipped with Infrared detector from Polymer Char. The samples can be dissolved in 1,2-dichlorobenzene, for example at 150 °C for 1 h.

In some preferred embodiments, said metallocene-catalyzed polyethylene A has a density of at most 0.918 g/cm$^3$, for example of at most 0.917 g/cm$^3$, for example of at most 0.916 g/cm$^3$, for example of at most 0.915 g/cm$^3$, for example of at most 0.914 g/cm$^3$, as measured according to ISO 1183-2:2004 at a temperature of 23 °C.

In some preferred embodiments, the melt index MI2 of said metallocene-catalyzed polyethylene A is at most 3.5 g/10 min, preferably at most 2.5 g/10 min, more preferably at most 1.5 g/10 min, as measured according to ISO 1133:2011 Procedure B at a temperature of 190 °C and a load of 2.16 kg.

In some preferred embodiments, said metallocene-catalyzed polyethylene A is an ethylene copolymer with a $C_4$-$C_{12}$ alpha-olefin comonomer, preferably wherein the $C_4$-$C_{12}$ alpha-olefin is selected from the group comprising propylene, 1-butene, 1-hexene, 4-methyl-1-pentene, 3-methyl-1-butene, and 1-octene, most preferably wherein the $C_4$-$C_{12}$ alpha-olefin is 1-hexene. Said metallocene-catalyzed polyethylene B can be obtained from the metallocene-catalyzed polyethylene composition by fractionating the metallocene-catalyzed polyethylene composition in two fractions with preparative TREF. In some preferred embodiments, said metallocene-catalyzed polyethylene B has a monomodal molecular weight distribution.

Said metallocene-catalyzed polyethylene B has a density higher than the density of said metallocene-catalyzed polyethylene A; and a melt index MI2 higher than the melt index MI2 of said metallocene-catalyzed polyethylene A.

In some embodiments, said metallocene-catalyzed polyethylene B is an ethylene homopolymer. In some preferred embodiments, said metallocene-catalyzed polyethylene B has a MI2 of at least 1.0 g/10 min, preferably at least 5.0 g/10 min, preferably at least 10.0 g/10 min, preferably at least 15.0 g/10 min as measured according to ISO 1133:2011 Procedure B at a temperature of 190 °C and a load of 2.16 kg.

In some preferred embodiments, said metallocene-catalyzed polyethylene B has a MI2 of at most 180 g/10 min, preferably at most 160 g/10 min, preferably at most 120 g/10 min, preferably at most 80 g/10 min, preferably at most 60 g/10 min.

In some preferred embodiments, said metallocene-catalyzed polyethylene B has a MI2 of at least 0.5 g/10 min to at most 180 g/10 min, preferably at least 1.0 g/10 min to at most 160 g/10 min, preferably at least 5.0 g/10 min to at most 100 g/10 min, preferably at least 5.0 g/10 min to at most 80 g/10 min, preferably at least 10 g/10 min to at most 50 g/10 min.

In some preferred embodiments, the metallocene-catalyzed polyethylene composition comprises at least 48% to at most 70% by weight of said metallocene-catalyzed polyethylene A, preferably at least 49% to at most 68% by weight of said metallocene-catalyzed polyethylene A, preferably at least 50% to at most 65% by weight of said metallocene-catalyzed polyethylene A wherein % by weight is based on the total weight of said metallocene-catalyzed polyethylene composition. In some preferred embodiments, the metallocene-catalyzed polyethylene composition comprises at least 35% to at most 52% by weight of said metallocene-catalyzed polyethylene B, preferably at least 35% to at most 51% by weight of said metallocene-catalyzed polyethylene B, preferably at least 38% to at most 50% by weight of said metallocene-catalyzed polyethylene B, wherein % by weight is based on the total weight of said metallocene-catalyzed polyethylene composition In some embodiments, the metallocene-catalyzed polyethylene composition can be prepared by chemically blending polyethylene said metallocene-catalyzed polyethylene A and said metallocene-catalyzed polyethylene B. For example, the metallocene-catalyzed polyethylene composition can be prepared in at least two sequential polymerization reactors, operating under different conditions, wherein a first polyethylene fraction is prepared in a first reactor, and a second polyethylene fraction is prepared in a second reactor in the presence of the first polyethylene fraction. For example, the hydrogen concentration and/or comonomer content can be controlled in each reactor separately, such as to produce the metallocene-catalyzed polyethylene composition.

The polymerization of ethylene for said metallocene-catalyzed polyethylene A, said metallocene-catalyzed

polyethylene B, and/or said metallocene-catalyzed polyethylene composition can be carried out in gas, solution or slurry phase. In some preferred embodiments, the polymerization of ethylene for said metallocene-catalyzed polyethylene A, said metallocene-catalyzed polyethylene B, and/or said metallocene-catalyzed polyethylene composition is carried out in slurry, preferably in a slurry loop reactor or a continuously stirred reactor. For example, the polyethylene can be prepared in slurry loop reactor system.

In some preferred embodiments, metallocene-catalyzed polyethylene composition is prepared in a process comprising the steps of:

(a) feeding ethylene monomer, a diluent, at least one metallocene catalyst, optionally hydrogen, and optionally one or more olefin comonomers into at least one first reactor, preferably a slurry reactor, preferably a slurry loop reactor; polymerizing the ethylene monomer, and the optionally one or more olefin comonomers (preferably as defined herein), in the presence of the metallocene catalyst, and optional hydrogen, in said first reactor to produce a first metallocene-catalyzed polyethylene;

(b) feeding the first metallocene-catalyzed polyethylene to a second reactor, preferably a slurry reactor, preferably a slurry loop reactor, serially connected to the first reactor, and in the second reactor polymerizing ethylene, and optionally one or more olefin comonomers, in the presence of the first polyethylene fraction, and optionally hydrogen, thereby producing the metallocene-catalyzed polyethylene composition .

In some preferred embodiments, the metallocene-catalyzed polyethylene A is the first polyethylene and is prepared in the first reactor of at least two sequential polymerization reactors, and, the metallocene-catalyzed polyethylene B is prepared in the second reactor of at least two sequential polymerization reactors.

In some embodiments, the metallocene-catalyzed polyethylene B is the first polyethylene and is prepared in the first reactor of at least two sequential polymerization reactors, and, the metallocene-catalyzed polyethylene A is prepared in the second reactor of at least two sequential polymerization reactors.

Preferably, the two reactors can be operated under the comonomer/hydrogen split mode of "inverse" (also described herein as "reverse") configuration, wherein a first low molecular weight (high melt index), high density metallocene-catalyzed polyethylene B is prepared in the first reactor and a second high molecular weight (low melt index), low density metallocene-catalyzed polyethylene A is prepared in the second reactor. In this case, the first polyethylene does not need to be degassed before being transferred to the second reactor. The metallocene-catalyzed polyethylene B is preferably substantially free of comonomer, particularly for densities of the metallocene-catalyzed polyethylene B of at least 0.960 g/cm$^3$.

This is as opposed to the "direct" configuration, wherein a first high molecular weight, low density metallocene-catalyzed polyethylene A is prepared in the first reactor and a second low molecular weight, high density metallocene-catalyzed polyethylene B is prepared in the second reactor, in which case the metallocene-catalyzed polyethylene A is preferably degassed in order to substantially remove all unpolymerized comonomer and thus for said metallocene-catalyzed polyethylene B to be substantially free of comonomer, particularly for densities of the metallocene-catalyzed polyethylene B of at least 0.960 g/cm$^3$.

As used herein, the terms "loop reactor" and "slurry loop reactor" may be used interchangeably herein. In certain embodiments, each loop reactor may comprise interconnected pipes, defining a reactor path. In certain embodiments, each loop reactor may comprise at least two vertical pipes, at least one upper segment of reactor piping, at least one lower segment of reactor piping, joined end to end by junctions to form a complete loop, one or more feed lines, one or more outlets, one or more cooling jackets per pipe, and one pump, thus defining a continuous flow path for a polymer slurry. The vertical sections of the pipe segments are preferably provided with cooling jackets. Polymerization heat can be extracted by means of cooling water circulating in these jackets of the reactor. The loop reactor preferably operates in a liquid full mode.

In certain embodiments, the process may be preceded by a pre-polymerization step. In certain embodiments, the pre-polymerization may be performed in a pre-polymerization (or further or third) slurry loop reactor connected in series with the first loop reactor. In certain embodiments, the pre-polymerization step may comprise pre-polymerizing ethylene in the presence of the metallocene catalyst in said pre-polymerization loop reactor connected in series with the first loop reactor.

When said metallocene-catalyzed polyethylene A is prepared in the second reactor of at least two reactors connected in series, the density of said metallocene-catalyzed polyethylene A is linked to that of the density of said metallocene-catalyzed polyethylene B as measured on the fluff by the following expression:

$$d_{final}=W_B*d_B+W_A*d_A$$

wherein $d_{final}$ is the density of the final polyethylene fluff, $W_B$ is the weight fraction of the metallocene-catalyzed polyethylene B, $d_B$ is the density of the metallocene-catalyzed polyethylene B as measured on the fluff, $W_A$ is the weight fraction of said metallocene-catalyzed polyethylene A, $d_A$ is the density of the metallocene-catalyzed polyethylene A, and wherein the sum of both metallocene-catalyzed polyethylene B and metallocene-catalyzed polyethylene A by weight ($W_B$+$W_A$) is 1.

In some embodiments, when said metallocene-catalyzed polyethylene A is prepared in the second reactor of at least two reactors connected in series, the MI2 of said metallocene-catalyzed polyethylene A is calculated based on the measured melt indexes and polyethylene contents of the metallocene-catalyzed polyethylene B and the final metallocene-catalyzed polyethylene composition.

The MI2 of said metallocene-catalyzed polyethylene A is calculated using the following expression, preferably when prepared in the presence of a tetrahydroindenyl metallocene catalyst:

$$Log\ MI2_{final} = W_A * Log(MI2_A) + W_B * Log(MI2_B)$$

wherein $MI2_{final}$ is the melt index MI2 final of the metallocene catalyzed polyethylene composition, $W_B$ is the weight fraction of said metallocene-catalyzed polyethylene B, $MI2_B$ is the MI2 of said metallocene-catalyzed polyethylene B measured on the fluff exiting the first reactor, $W_A$ is the weight fraction of said metallocene-catalyzed polyethylene A, $MI2_A$ is the MI2 of said metallocene-catalyzed polyethylene A as calculated, and wherein the sum of both said metallocene-catalyzed polyethylene B and said metallocene-catalyzed polyethylene A by weight ($W_B$+$W_A$) is 1.

In some embodiments, said metallocene-catalyzed polyethylene A has a melt index MI2 of at most 1.50 g/10 min, preferably at most 1.40 g/10 min, preferably at most 1.30 g/10 min, preferably at most 1.0 g/10 min as measured according to ISO 1133:2011 Procedure B at a temperature of 190 °C and a load of 2.16 kg. In some embodiments, said metallocene-catalyzed polyethylene A has a melt index MI2 of at least 0.01 g/10 min, preferably of at least 0.03 g/10 min. In some embodiments, said metallocene-catalyzed polyethylene A has a melt index MI2 from 0.01 g/10 min to 1.50 g/10 min, preferably from 0.02 g/10 min to 1.35 g/10 min.

The slurry polymerization can be performed over a wide temperature range. In certain embodiments, the polymerization may be performed at a temperature from 20 °C to 125 °C, preferably from 60 °C to 110 °C, more preferably from 75 °C to 105 °C and most preferably from 80 °C to 100 °C. In certain embodiments, the polymerization step may be performed at a pressure from about 20 bar to about 100 bar, preferably from about 30 bar to about 50 bar, and more preferably from about 37 bar to about 45 bar.

The catalyst is preferably added to the slurry reactor as catalyst slurry. As used herein, the term "catalyst slurry" refers to a composition comprising catalyst solid particles and a diluent. The solid particles can be suspended in the diluent, either spontaneously or by homogenization techniques, such as mixing. The solid particles can be non-homogeneously distributed in a diluent and form sediment or deposit.

As used herein, the term "diluent" refers to any organic diluent, which does not dissolve the synthesized polyolefin. As used herein, the term "diluent" refers to diluents in a liquid state, liquid at room temperature and preferably liquid under the pressure conditions in the loop reactor. Suitable diluents comprise but are not limited to hydrocarbon diluents such as aliphatic, cycloaliphatic and aromatic hydrocarbon solvents, or halogenated versions of such solvents. Preferred solvents are $C_{12}$ or lower, straight chain or branched chain, saturated hydrocarbons, $C_5$ to $C_9$ saturated alicyclic or aromatic hydrocarbons or $C_2$ to $C_6$ halogenated hydrocarbons. Non-limiting illustrative examples of solvents are butane, isobutane, pentane, hexane, heptane, cyclopentane, cyclohexane, cycloheptane, methyl cyclopentane, methyl cyclohexane, isooctane, benzene, toluene, xylene, chloroform, chlorobenzenes, tetrachloroethylene, dichloroethane and trichloroethane, preferably isobutane.

Also gas phase processes may be applied to prepare the polyethylene composition defined herein. Gas phase processes for the polymerization of olefins are well known in the art. Typical operating conditions for the gas phase are from 20 °C to 100 °C and most preferably from 40 °C to 85 °C with pressures up to 100 bar. Preferred gas phase processes are those operating in a fluidized bed.

In some embodiments, the slit film, tape or monofilament comprises one or more additives such as for example antioxidants, UV stabilizers, pigments, processing aids, acid scavengers, lubricants, antistatic agents, fillers, nucleating agents, flame retardants, and clarifying agents. The additives are typically present in an amount of 0.05 to 0.2% by weight each; for the fillers, typically from 1 to 30% by weight; and for pigments and flame retardants, typically 0.1 to 10% by weight each. An overview of useful additives is given in Plastics Additives Handbook, ed. H. Zweifel, 5th edition, Hanser Publishers.

Preferably, the slit film, tape or monofilament further comprises a processing aid, for example a fluoroelastomer. In some preferred embodiments, the slit film, or tape comprises at least 0.005 ppm to at most 500 ppm, preferably at least 0.020 ppm to at most 200 ppm, preferably at least 0.10 ppm to at most 150 ppm, preferably at least 1.0 ppm to at most 100 ppm, preferably at least 50 ppm to at most 100 ppm of a processing aid, for example a fluoroelastomer, based

on the weight of the polyethylene composition.

The present invention also encompasses a process for manufacturing a slit film, tape or monofilament, comprising the steps of:

a) providing a metallocene-catalyzed polyethylene composition as defined herein and

b) forming the polyethylene composition of step a) into slit films, tapes or monofilaments; preferably into slit films, tapes or monofilaments having a titer from at least 100 dTex to at most 1500 dTex.

More particularly, a process for manufacturing a slit film, tape or monofilament is provided, comprising the steps of:

a) providing a metallocene-catalyzed polyethylene composition preferably as defined herein;

b) forming the polyethylene composition of step a) into a film; and

c) slitting the film of step b) into slit films, tapes or monofilaments; preferably wherein said film is slit in slit films, tapes or monofilaments having a titer from at least 100 dTex to at most 1500 dTex.

In some embodiments, said metallocene-catalyzed polyethylene composition is prepared in a process comprising the steps of:

a) providing a metallocene-catalyzed polyethylene A;

b) providing a metallocene-catalyzed polyethylene B;

c) blending said metallocene-catalyzed polyethylene A and said metallocene-catalyzed polyethylene B into a said metallocene-catalyzed polyethylene composition.

Said blending may be performed through physically blending the polyethylene (fractions), for example through melt blending the polyethylene (fractions). Said metallocene-catalyzed polyethylene A can be prepared in a single polymerization reactor. Said metallocene-catalyzed polyethylene B can be separately prepared in a single polymerization reactor, and then the two polyethylenes can be blended together.

The polyethylene composition can be obtained by chemically or physically blending at least two polyethylenes. The metallocene-catalyzed polyethylene composition can be obtained by a mixture of chemically or physically blending at least the metallocene-catalyzed polyethylene A and the metallocene-catalyzed polyethylene B. The metallocene-catalyzed polyethylene composition can be obtained by chemically or physically blending at least two polyethylene fractions, i.e. the metallocene-catalyzed polyethylene A and the metallocene-catalyzed polyethylene B. Additionally, one or more additives, for instance such as those disclosed herein, may be also physically blended into the polyethylene composition.

In some embodiments, the blending of the metallocene-catalyzed polyethylene A and the metallocene-catalyzed polyethylene B may be performed by physically blending, preferably by melt blending. In some preferred embodiments, the metallocene-catalyzed polyethylene A and the metallocene-catalyzed polyethylene B are blended in fluff form, powder form, or pellet form, preferably in pellet form.

As used herein, the term "melt blending" involves the use of shear force, extensional force, compressive force, ultrasonic energy, electromagnetic energy, thermal energy or combinations comprising at least one of the foregoing forces or forms of energy and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, rolls, rams, helical rotors, or combinations comprising at least one of the foregoing. Melt blending may be conducted in machines such as, single or multiple screw extruders, Buss kneader, Eirich mixers, Henschel, helicones, Ross mixer, Banbury, roll mills, molding machines such as injection molding machines, vacuum forming machines, blow molding machines, or the like, or combinations comprising at least one of the foregoing machines. In a preferred embodiment, melt blending is performed in a twin screw extruder, such as a Brabender co-rotating twin screw extruder.

Alternatively, said blending may also be performed through chemically blending the polyethylene (fractions), as described herein above.

Preferred embodiments as described above for preparing a metallocene-catalyzed polyethylene composition are also preferred embodiments for the present process.

When slit films, tapes or monofilaments of the invention comprise a mixture of the metallocene-catalyzed polyethylene composition together with other polymer components, the different polymer components are typically intimately mixed prior to extrusion.

As indicated above, one of the steps of a process according to the invention can involve the formation of the polyethylene composition into a film or sheet. Throughout the present application the terms "forming" and "shaping" may be used synonymously.

Such film (or sheet) may be prepared by any conventional film formation process including extrusion procedures, such as cast film or blown film extrusion, lamination processes or any combination thereof. The film may be a monolayer or multilayer film, e.g. a coextruded multilayer film. In the case of a multilayer film, preferably, the film layers may comprise the same or different polymer composition, whereby at least one layer comprises the metallocene-catalyzed polyethylene composition as defined herein. Preferably, all layers of a multilayer film comprise, more preferably consist of, a metallocene-catalyzed polyethylene composition as defined herein. In some embodiments all layers of a multilayerfilm comprise, more preferably consist of, the same metallocene-catalyzed polyethylene composition as defined herein.

Any known film blowing line equipment can be used to prepare blown films, for example Macchi®'s COEX FLEX@. The process parameters which can be used are well-known to the person skilled in the art depending on the desired application of the film. For example: The die diameter can vary from 50 to 2000 mm. The blow-up ratio (BUR) can be of 1 to 5. The die-gap can be of 0.8 to 2.6 mm. The throughput can be of 10kg/h to 2000kg/h. The extrusion screw can have a diameter of from 30 mm to 150 mm. Preferably, the screw is a barrier screw. Typical cast film equipment can be provided by Dolci, SML etc. Again, the skilled person would know how to run the cast film line to obtain the best possible results.

In some embodiments, the slit films, or tapes are in stretched, *i.e.* oriented, form. Preferably slit films, or tapes are stretched uniaxially, more preferably in the machine direction (MD). When a film is first formed and cut to slit films or tapes, said film can be stretched before cutting to stretched slit films or tapes, or the film is first cut and then the formed tapes are stretched to form final stretched tapes. Preferably the film is first cut to tapes which are then stretched to a desired draw ratio to form final slit films, or tapes. As to preparation of slit films, or tapes by first forming a film and cutting it into tapes, reference can be made to the known Lenzing process (for stretching a film prior to cutting into tapes) and the Iso process (for cutting a film into tapes and stretching the formed tapes).

Alternatively, methods as described in WO 2011/046545, paragraphs 064 to 075 can be adapted by a skilled person to produce the slit film and tapes. Processes to extrude tapes or monofilaments may be adapted by a skilled person from DE102011011790.

As a preferred embodiment thus stretched slit films, or tapes are provided which are preferably in stretched, *i.e.* oriented, form, preferably in uniaxially oriented form.

Heat may typically be applied during the stretching, e.g. during in line stretching. The stretching ratio can be determined e.g. by the speed ratio of the godet rolls before and after the heating means in a manner known in the art. As also well known, the stretch and heat setting ratios can be optimized and adapted depending on the demands of the end application. As heating means e.g. an oven or a hot water bath can be used at temperatures typically between 90 °C and 130 °C or 90-99 °C, respectively. Accordingly, the slit films, or tapes preparation process preferably comprises a step of stretching tapes cut from a film, or of stretching film prior to cutting into tapes, whereby the stretching is preferably effected in the machine direction (MD) in a draw ratio of at least 1: 2, preferably at least 1:3, preferably at least 1:5, preferably at least 1:7. A preferable slits film, or tapes preparation process thus comprises a step of extruding a film which is optionally stretched, preferably in MD, at least 3 times its original length and subsequently cut to slits film, or tapes, or which film is first cut to slit films, or tapes that are optionally stretched, preferably in MD, at least 3 times their original length.

More preferably, extruded slit films, or tapes cut from a film or a film prior to cutting into slit films, or tapes is/are stretched 3 to 20 times, preferably 5 to 17 times, preferably 7 to 15 times, preferably 10 to 12 times, for example around 12 times its/their original length in the MD. The expressions "stretching 3 times its/their original length" and "drawn down to 3 times its/their original length" mean the same and can also be expressed as a "stretch ratio of at least 1:3" and, respectively, "draw ratio of at least 1:3", wherein "1" represents the original length of the film and "3" denotes that it has been stretched/drawn down to 3 times that original length.

In some embodiments, the maximum strength at break of said slit film, tape or monofilament is at least 20 cN/tex, preferably at least 25 cN/tex, preferably at least 30 cN/tex, preferably at least 35 cN/tex, preferably at least 40 cN/tex, determined according to a modified EN ISO-5079:1995, using a 10 mm gauge length and 10 mm/min tensile speed at 23°C, on a Zwick tensile tester.

In some embodiments, the elongation at break of said slit film, tape or monofilament is at least 20 %, preferably at least 25 %, preferably at least 30 %, preferably at least 35 %, preferably at least 40 %, determined according to a modified EN ISO-5079:1995, using a 10 mm gauge length and 10 mm/min tensile speed at 23°C, on a Zwick tensile tester.

In some embodiments, the creep strain rate of said slit film, tape or monofilament after 5 h is at most 1.0 %/h, preferably at most 0.5 %/h, preferably at most 0.1 %/h, preferably 0.05 %/h, preferably at most 0.040 %/h, more preferably

at most 0.035 %/h, preferably at most 0.030 %/h, determined as described in the example section.

The present invention also encompasses articles, such as fabrics, made from slit films, tapes or monofilaments according to the invention. These articles may be fabrics that can be formed into carpet backing, artificial turf backing, industrial-type bags, sacks or wraps; ropes or cordage; artificial turf and geotextiles. The invention also encompasses the use of the slit film, tape or monofilament according to the invention, to prepare an article as referred to above.

Therefore, the invention also encompasses the use of an article, such as a fabric according to the invention, for making other products, e.g. as a backing material in carpets, more preferably in tufted carpets and most preferably in artificial turfs. In some embodiments, the slit film, tape or monofilament may be used as turf yarn. In other embodiments, a backing material and a yarn of the carpet, e.g. artificial turf, may be made from a slit film, tape or monofilament according to the invention.

Therefore, the present invention also encompasses a fabric, comprising slit films, tapes, or monofilaments as described herein above, wherein said slit films, tapes, or monofilaments comprising at least 70% by weight of a metallocene-catalyzed polyethylene composition, based on the total weight of the slit films, tapes or monofilaments; wherein said metallocene-catalyzed polyethylene composition comprises:

a) at least 45% to at most 75% by weight based on the total weight of the metallocene-catalyzed polyethylene composition of a metallocene-catalyzed polyethylene A,
wherein said metallocene-catalyzed polyethylene A has

- a density of at most 0.918 g/cm$^3$, as measured according to ISO 1183-2:2004 at a temperature of 23 °C; and
- a melt index MI2 of at most 4.0 g/10 min, as measured according to ISO 1133:2011 Procedure B at a temperature of 190 °C and a load of 2.16 kg; and

b) at least 25% to at most 55% by weight based on the total weight of the metallocene-catalyzed polyethylene composition of a metallocene-catalyzed polyethylene B;
wherein said metallocene-catalyzed polyethylene B has

- a density as measured according to ISO 1183-2:2004 at a temperature of 23 °C which is higher than the density of said metallocene-catalyzed polyethylene A; and
- a melt index MI2 as measured according to ISO 1133:2011 Procedure B at a temperature of 190 °C and a load of 2.16 kg which is higher than the melt index MI2 said metallocene-catalyzed polyethylene A.

The present invention also encompasses the fabric according to the invention, wherein the fabric is used as a backing for tufted carpets or artificial turf.

The present invention also encompasses a backing suitable for tufted carpets or artificial grass turf, comprising a fabric according to the invention, preferably wherein said fabric is a primary backing.

The present invention also encompasses an artificial turf, comprising a backing according to the invention.

The present invention also encompasses an artificial turf comprising the slit film, tape or monofilament according to the invention. Preferably does said artificial turf comprise the slit film, tape or monofilament according to the invention as primary backing. Preferred embodiments for said slit film, tape or monofilament are also preferred embodiments for the artificial turf comprising the slit film, tape or monofilament.

According to a preferred embodiment, an artificial turf comprises at least one backing and grass yarns protruding from said at least one backing. A backing is herein referred as "a primary backing" when the grass yarns are positioned trough said backing. Typically this is done when the primary backing is a fabric, preferably a woven fabric, and grass yarns are inserted through the fabric. The grass yarns can protrude through the primary backing as loops, or the loops can be cut open. A secondary backing may be applied on the primary backing, typically locking the grass yarns in place. Typically, a secondary backing is glued on or applied in a liquid state, left to solidify. Preferably, the at least one primary backing is creep resistant in order to provide a dimensional stable artificial turf, whereas the grass yarns need preferably to be resilient, flexible and soft.

According to an embodiment, the backing may comprise different layers, stacked on top of each other or bonded to each other. Layers of said backing which are penetrated or intended to be penetrated by tuft fibers or grass yarns are hereby also referred as "primary backing". These primary backings can preferably provide the dimensional stability of the carpet or the artificial turf and preferably provide the spacing between the tuft fibers or grass yarns. Layers of said backing which are not penetrated by tuft fibers or grass fibers are herein referred as "secondary backing". These secondary backing may permanently fix the tuft fibers or grass fibers to the primary backing.

In some embodiments, the primary backing is preferably a woven fabric of slit films, tapes or monofilaments

according to the invention; more preferably the primary backing is an open weave of slit films, tapes or filaments. In some embodiments, the woven fabric comprises weft slit films, tapes or filaments and warp slit films, tapes or filaments. Preferably grass yarns are inserted through the primary backing, preferably by tuft-needles. The grass yarns are preferably inserted into the primary backing between the weft slit films, tapes or filaments and the warp slit films, tapes or filaments. To provide a suitable primary backing a balance need to be sought after between the strength, flexibility and creep resistance. It is generally known in the art that polyethylene is not a suitable material as backing or primary backing for artificial turf, as polyethylene has not the necessary creep resistance. Traditionally, polypropylene is the material of choice for backing material. However, it has been found by the inventors that the a backing or a primary backing made from slit film, tapes or monofilaments as described herein does provide the necessary creep resistance so that the specific polyethylene composition as described herein is suitable to be used in a backing, preferably a primary backing for artificial turf.

In some embodiments, an infill may be present between the grass yarns.

Preferably, the invention relates to an artificial turf comprising at least one backing, wherein said backing is comprised of slit films, tapes, or monofilaments, said slit films, tapes, or monofilaments comprising at least 70% by weight of a metallocene-catalyzed polyethylene composition, based on the total weight of the slit films, tapes or monofilaments;
wherein said metallocene-catalyzed polyethylene composition comprises:

a) at least 45% to at most 75% by weight based on the total weight of the metallocene-catalyzed polyethylene composition of a metallocene-catalyzed polyethylene A,
wherein said metallocene-catalyzed polyethylene A has

- a density of at most 0.918 g/cm$^3$, as measured according to ISO 1183-2:2004 at a temperature of 23 °C; and
- a melt index MI2 of at most 4.0 g/10 min, as measured according to ISO 1133:2011 Procedure B at a temperature of 190 °C and a load of 2.16 kg; and

b) at least 25% to at most 55% by weight based on the total weight of the metallocene-catalyzed polyethylene composition of a metallocene-catalyzed polyethylene B;
wherein said metallocene-catalyzed polyethylene B has

- a density as measured according to ISO 1183-2:2004 at a temperature of 23 °C which is higher than the density of said metallocene-catalyzed polyethylene A; and
- a melt index MI2 as measured according to ISO 1133:2011 Procedure B at a temperature of 190 °C and a load of 2.16 kg which is higher than the melt index MI2 said metallocene-catalyzed polyethylene A.

The invention further relates to a process for manufacturing an artificial turf according to an embodiment of the invention, comprising the steps of:

- forming, preferably weaving, at least one backing using a slit films, tapes, or monofilaments, said slit films, tapes or monofilaments comprising at least 70% by weight of a metallocene-catalyzed polyethylene composition based on the total weight of the slit film, tape or monofilament;
  wherein said metallocene-catalyzed polyethylene composition comprises:

  a) at least 45% to at most 75% by weight based on the total weight of the metallocene-catalyzed polyethylene composition of a metallocene-catalyzed polyethylene A,
  wherein said metallocene-catalyzed polyethylene A has

  - a density of at most 0.918 g/cm$^3$, as measured according to ISO 1183-2:2004 at a temperature of 23 °C; and
  - a melt index MI2 of at most 4.0 g/10 min, as measured according to ISO 1133:2011 Procedure B at a temperature of 190 °C and a load of 2.16 kg; and

  b) at least 25% to at most 55% by weight based on the total weight of the metallocene-catalyzed polyethylene composition of a metallocene-catalyzed polyethylene B;
  wherein said metallocene-catalyzed polyethylene B has

  - a density as measured according to ISO 1183-2:2004 at a temperature of 23 °C which is higher than the density of said metallocene-catalyzed polyethylene A; and

- a melt index MI2 as measured according to ISO 1133:2011 Procedure B at a temperature of 190 °C and a load of 2.16 kg which is higher than the melt index MI2 said metallocene-catalyzed polyethylene A;

- and using said at least one backing for preparing the artificial turf.

The invention further provides in a process for the recovery of polyethylene from a fabric, such as the backing from an artificial turf, comprising the step of:

a) collecting a fabric such as the backing of artificial turf according an embodiment of the invention;

b) melting the fabric, collected in step a) obtaining a polyethylene melt; thereby recovering said polyethylene.

In some embodiments, the recovering of said polyethylene done in step b) is done by extrusion of the polyethylene melt, preferably extrusion into pellets.
In some embodiments, the artificial turf comprises grass yarns which comprise, preferably consist of, a polyethylene.
In some embodiments, the at least one backing and the grass yarns are essentially free of polymers others than polyethylene and polyethylene copolymers.
In some embodiments, the process for recovering polyethylene does not comprise the step of separating the at least one backing from the grass yarns.
In some embodiments, the artificial turf is collected in step a) whereby the grass yarns are attached to the at least one backing.
The following examples serve to merely illustrate the invention and should not be construed as limiting its scope in any way. While the invention has been shown in only some of its forms, it should be apparent to those skilled in the art that it is not so limited, but is susceptible to various changes and modifications without departing from the scope of the invention.

**EXAMPLES**

**Test methods:**

The density was measured as measured according to ISO 1183-2:2004 Part 2: Density gradient column method at a temperature of 23 °C.
The melt index MI2 of the polyethylene was measured according to ISO 1133:2011 Procedure B, condition D at a temperature of 190 °C and a load of 2.16 kg.
The melt temperature of the polyethylene was measured according to ISO 11357:2009.
The molecular weights ($M_n$ (number average molecular weight), $M_w$ (weight average molecular weight) and molecular weight distributions d ($M_w/M_n$), and d' ($M_z/M_w$) were determined by size exclusion chromatography (SEC) and in particular by gel permeation chromatography (GPC). Briefly, a GPC-IR5 from Polymer Char was used: 10 mg polyethylene sample were dissolved at 160 °C in 10 mL of trichlorobenzene for 1 hour. Injection volume: about 400 μL, automatic sample preparation and injection temperature: 160 °C. Column temperature: 145 °C. Detector temperature: 160 °C. Two Shodex AT-806MS (Showa Denko) and one Styragel HT6E (Waters) columns were used with a flow rate of 1 ml/min. Detector: Infrared detector (2800-3000 $cm^{-1}$). Calibration: narrow standards of polystyrene (PS) (commercially available). Calculation of molecular weight $M_i$ of each fraction i of eluted polyethylene is based on the Mark-Houwink relation ($\log_{10}(Mp_E) = 0.965909 \times \log_{10}(M_{PS}) - 0.28264$) (cut off on the low molecular weight end at $M_{PE}$ = 1000).
The molecular weight averages used in establishing molecular weight/property relationships are the number average ($M_n$), weight average ($M_w$) and z average ($M_z$) molecular weight. These averages are defined by the following expressions and are determined form the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i\, M_i} = \frac{\sum_i W_i M_i}{\sum_i W_i} = \frac{\sum_i h_i M_i}{\sum_i h_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here, $N_i$ and $W_i$ are the number and weight, respectively, of molecules having molecular weight Mi. The third representation in each case (farthest right) defines how one obtains these averages from SEC chromatograms. Here, $h_i$ is the height (from baseline) of the SEC curve at the $i^{th}$ elution fraction and $M_i$ is the molecular weight of species eluting at this increment.

The maximum strength at break (cN/tex) of a slit film, or tape was determined according to a modified EN ISO-5079:1995, using a 10 mm gauge length and 10 mm/min tensile speed at 23°C, on a Zwick tensile tester.

The elongation at break of a slit film, or tape was determined according to a modified EN ISO-5079:1995, using a 10 mm gauge length and 10 mm/min tensile speed at 23°C, on a Zwick tensile tester.

The creep strain rate after 5 h (%/h) was determined on a Zwick tensile tester by applying a constant load during 5 hours at 50°C. The applied load has been determined in such a way to correspond to 8 cN/Tex at the initial state, before any deformation. This load corresponds roughly to 30-35% of the maximal tensile strength of the tapes. The reported creep strain rate after 5 hours has been determined as the difference in gauge length at hour 4 and hour 5 divided by gauge length at hour 4. It is expressed in %/hour.

The total co-monomer content is determined by $^{13}C$ NMR analysis according to the state of the art of $^{13}C$ NMR analysis of ethylene based polyolefins.

The $^{13}C$ NMR analysis was performed under conditions such that the signal intensity in the spectrum is directly proportional to the total number of contributing carbon atoms in the sample. Such conditions are well known to the skilled person and include for example sufficient relaxation time etc. In practice, the intensity of a signal is obtained from its integral, i.e. the corresponding area. The data were acquired using proton decoupling, several hundred even thousands scans per spectrum, at a temperature of 130 °C. The sample was prepared by dissolving a sufficient amount of polymer in 1,2,4-trichlorobenzene (TCB 99 % spectroscopic grade) at 130 °C and occasional agitation to homogenize the sample, followed by the addition of hexadeuterobenzene ($C_6D_6$, spectroscopic grade) and a minor amount of hexamethyldisiloxane (HMDS, 99.5+ %), with HMDS serving as internal standard. To give an example, about 200 to 600 mg of polymer were dissolved in 2.0 ml of TCB, followed by addition of 0.5 ml of C6D6 and 2 to 3 drops of HMDS. The chemical shifts are referenced to the signal of the internal standard HMDS, which is assigned a value of 2.03 ppm. NMR$^{13}C$ observed signals are assigned according to the co-monomer involved and corresponding literature. The following non-exhaustive literature references can be used: G.J. Ray et al. in Macromolecules, vol 10, n°4, 1977, p. 773-778 and Y. D Zhang et al in Polymer Journal, vol 35, n°7, 2003, p. 551-559. The total co-monomer content relative to the total weight of ethylene polymer is determined from the appropriate peaks area combination, a well-known method to the skilled person.

The tape titers were measured on a Zweigle vibroscope S151/2 in accordance with norm ISO 1973: 1995.

The strength and elongation at Fmax is measured in accordance with ISO 13934-1:2013, executed on 5 cm strip.

Materials:

The following polyethylene compositions were used in the examples: Ethylene with 1-hexene as comonomer was polymerized using ethylene-bis(tetrahydroindenyl)zirconium dichloride as metallocene catalyst in a slurry polymerization process in two loop reactors connected in series, to provide the metallocene-catalyzed polyethylene compositions of Examples 1-4, using the reaction conditions as listed in Table 1. The polyethylene fraction prepared in Reactor 1 is suitable as polyethylene B, having the properties listed in Table 2. The polyethylene fraction prepared in Reactor 2 is suitable as polyethylene A, having the properties listed in Table 2.

Ethylene with 1-hexene as comonomer was polymerized using an ethylene-bis(tetrahydroindenyl)zirconium dichloride in a slurry polymerization process in a single liquid full loop reactor to provide the metallocene-catalyzed polyethylene composition of Comparative Example 5, using the reaction conditions as listed in Table 1.

Ethylene with 1-hexene as comonomer was polymerized using a Ziegler-Natta catalyst in a slurry polymerization process in two liquid full loop reactors which are connected in series, a liquid full loop reactor to provide the polyethylene composition of Comparative Example 6, using the reaction conditions as listed in Table 1.

In all examples and comparative examples, the same primary anti-oxidant, secondary anti-oxidant and fluoroelastomer-based processing aid were used, together being present in less than 0.2 % by weight.

Table 1: Polymerization conditions

| | Reaction conditions in first reactor | | | | | | | Reaction conditions in second reactor | | | | | | |
|---|---|---|---|---|---|---|---|---|---|---|---|---|---|---|
| | Triisobutyl-aluminum (ppm) | Ethylene feed (kg/h) | 1-hexene feed (kg/h) | $H_2$ feed (normal L/h) | isobutane feed (kg/h) | 1-hexene / ethylene ratio in off gas | $H_2$ / ethylene ratio in off gas | Triisobutyl-aluminum (ppm) | Ethylene feed (kg/h) | 1-hexene feed (kg/h) | $H_2$ feed (normal L/h) | isobutane feed (kg/h) | 1-hexene / ethylene ratio in off gas | Catalyst type |
| Example 1 | 62 | 3330 | 9 | 4400 | 2150 | 0.085 | 0.00 | 41 | 4600 | 126 | 842 | 3490 | 0.93 | metallocene |
| Example 2 | 63 | 3100 | 16 | 4410 | 2110 | 0.137 | 0.00 | 21 | 2380 | 130 | 1240 | 3480 | 0.92 | metallocene |
| Example 3 | 50 | 28 | 1 | 33 | 60 | 0.227 | 0.00 | 51 | 26 | 6 | 6 | 45 | 1.17 | metallocene |
| Example 4 | 25 | 10000 | 1000 | 11760 | 11200 | 0.783 | 0.87 | 23 | 14000 | 2500 | 2576 | 13000 | 1.18 | metallocene |
| Comparative Example 5 | 30 | 21900 | 375 | 1096 | 15700 | 0.080 | 0.00 | - | - | - | - | - | - | metallocene |
| Comparative Example 6 | 50 | 15900 | 5 | 26150 | 14600 | 0.044 | 0.06 | 50 | 17500 | 0 | 33600 | 8300 | 0.02 | Ziegler-Natta |

Table 2: Properties of the polyethylene compositions used to make slit films, or tapes:

| | polyethylene composition | | | | | | Polyethylene produced in the first reactor | | | Polyethylene produced in the second reactor calculated | | |
|---|---|---|---|---|---|---|---|---|---|---|---|---|
| | MI2 (g/10 min) | Density (g/cm³) | Mw/Mn | comonomer | Comonomer content (wt%) | Melt temperature (°C) | MI2 (g/10 min) | Density (g/cm³) | wt% | MI2 (g/10 min) | Density (g/cm³) | wt% |
| Example 1 | 0.45 | 0.930 | 3.8 | C6 | 4.3 | 123 | 21 | 0.955 | 42 | 0.028 | 0.912 | 58 |
| Example 2 | 0.69 | 0.930 | 3.7 | C6 | 4.3 | 123 | 24 | 0.954 | 42 | 0.053 | 0.913 | 58 |
| Example 3 | 1.65 | 0.932 | 3.3 | C6 | 4.5 | 122 | 23 | 0.946 | 51 | 0.106 | 0.916 | 49 |
| Example 4 | 0.78 | 0.922 | 3.4 | C6 | 7 | 113 | 22 | 0.930 | 42 | 0.07 | 0.914 | 58 |
| Comparative Example 5 | 0.79 | 0.946 | 2.7 | C6 | 0.5 | 131 | 1 | 0.946 | 100 | - | - | - |
| Comparative Example 6 | 0.80 | 0.958 | 5.8 | - | <0.5 | 132 | 0.80 | 0.959 | 48 | 0.80 | 0.959 | 52 |

In examples 1-4, the metallocene-catalyzed polyethylene B was formed in the first reactor forming as fluff. This fluff was passed into the second reactor, wherein said metallocene-catalyzed polyethylene A was formed. The product leaving the second reactor was a fluff. This fluff was then pelletized using the known techniques in the art. The density of the metallocene-catalyzed polyethylene composition was measured on the pelletized form; whereas the density of said metallocene-catalyzed polyethylene B was measured on fluff obtained directly from the first reactor.

The properties of the polyethylene fraction prepared in the second reactor were calculated using the formulas as disclosed herein.

Tapes

From the polyethylene compositions obtained in Table 1, slit film, or tapes were prepared for testing their mechanical properties. The slit film, or tapes were produced using extrusion and stretching. The conditions used to make the slit film, or tapes are listed in Table 3.

Table 3: Extrusion conditions and properties of slit film, or tapes made from composition obtained in Table 1.

| | Settings | | | | | | | | Tape values | | | |
|---|---|---|---|---|---|---|---|---|---|---|---|---|
| | Extrusion temperature (°C) | Die temperature (°C) | Water bath temperature (°C) | Take-up speed (m/min) | Stretch roll speed (m/min) | Draw ratio | Stretch godets Temperature (°C) | Oven temperature (°C) | Titer (dTex) | Max strength at break(cN/tex) | Elongation at break (%) | Creep strain rate after 5 h (%/h) |
| Example 1 | 240 | 250 | 34 | 7 | 50 | 7.1 | 90 | 130 | 386 | 43 | 41 | 0.006 |
| Example 2 | 240 | 250 | 35 | 7 | 50 | 7.1 | 90 | 130 | 380 | 41 | 46 | 0.014 |
| Example 3 | 230 | 240 | 35 | 6.1 | 50 | 8.2 | 90 | 130 | 374 | 39 | 47 | 0.027 |
| Example 4 | 230 | 240 | 35 | 10.1 | 60 | 5.9 | 90 | 120 | 462 | 42 | 31 | 0.007 |
| Comparative Example 5 | 250 | 250 | 30 | 9.6 | 80 | 8.3 | 90 | 120 | 572 | 41 | 43 | 0.040 |
| Comparative Example 6 | 260 | 260 | 35 | 10.7 | 80 | 7.5 | 90 | 120 | 471 | 41 | 110 | 4.0 |

Fabric

Woven fabrics have been produced with the tapes of Example 1 and Comparative Example 6 of Table 3, with 100 warps/cm and 55 wefts/cm (i.e. fabric may comprise 100 tapes in the warp direction per centimeter and 55 tapes in the weft direction per centimeter). Properties of the fabrics are summarized in Table 4.

Table 4

| Fabric made of tapes of: | grams per square meter g/m$^2$ | Strength at Fmax Machine direction N/5cm | Strength at Fmax Cross direction N/5cm | Elongation at Fmax Machine direction % | Elongation at Fmax Cross direction % |
|---|---|---|---|---|---|
| Example 1 | 60 | 365 | 336 | 20 | 13 |
| Comparative Example 6 | 73 | 425 | 402 | 56 | 32 |

Artificial turf

The fabrics obtained in Table 4 may be used in a backing for artificial turf. The fabrics may serve as a primary backing. Grass yarns can be tufted into this fabric, for example, 6-ply 1.300 dTex C-shaped grass yarns can be tufted in the fabric. These yarns can be durably anchored using for example a polyethylene-based hot melt. The dimensional stability of the resulting artificial turf under a constant load is directly related to the creep resistance of the tapes.

## Claims

1. A fabric, comprising slit films, tapes, or monofilaments, said slit films, tapes, or monofilaments comprising at least 70% by weight of a metallocene-catalyzed polyethylene composition, based on the total weight of the slit films, tapes or monofilaments;
wherein said metallocene-catalyzed polyethylene composition comprises:

    c) at least 45% to at most 75% by weight based on the total weight of the metallocene-catalyzed polyethylene composition of a metallocene-catalyzed polyethylene A,
    wherein said metallocene-catalyzed polyethylene A has

        - a density of at most 0.918 g/cm$^3$, as measured according to ISO 1183-2:2004 at a temperature of 23 °C; and
        - a melt index MI2 of at most 4.0 g/10 min, as measured according to ISO 1133:2011 Procedure B at a temperature of 190 °C and a load of 2.16 kg; and

    d) at least 25% to at most 55% by weight based on the total weight of the metallocene-catalyzed polyethylene composition of a metallocene-catalyzed polyethylene B;
    wherein said metallocene-catalyzed polyethylene B has

        - a density as measured according to ISO 1183-2:2004 at a temperature of 23 °C which is higher than the density of said metallocene-catalyzed polyethylene A; and
        - a melt index MI2 as measured according to ISO 1133:2011 Procedure B at a temperature of 190 °C and a load of 2.16 kg which is higher than the melt index MI2 said metallocene-catalyzed polyethylene A.

2. The fabric according to claim 1, wherein said slit films, tapes or monofilaments have a titer of at least 100 dTex to at most 1500 dTex.

3. The fabric according to claim 1 or claim 2, wherein said fabric is a woven fabric.

4. The fabric according to any one of claims 1 to 3, wherein said metallocene-catalyzed polyethylene composition has a density of at least 0.910 g/cm3 to at most 0.945 g/cm3, as measured according to ISO 1183-2:2004 at a temperature of 23 °C.

5. The fabric according to any one of claim 1 to 4, wherein said metallocene-catalyzed polyethylene composition has a melt index MI2 of at least 0.2 g/10 min to at most 2.5 g/10 min, as measured according to ISO 1133:2011 Procedure B at a temperature of 190 °C and a load of 2.16 kg.

6. The fabric according to any one of claims 1 to 5, wherein said metallocene-catalyzed polyethylene composition has a molecular weight distribution Mw/Mn of at least 2.8 to at most 6.0, as measured using gel permeation chromatography, with Mw being the weight-average molecular weight and Mn being the number-average molecular weight.

7. The fabric according to any one of claims 1 to 6, wherein said metallocene-catalyzed polyethylene composition has a multimodal molecular weight distribution, preferably wherein said metallocene-catalyzed polyethylene composition has a bimodal molecular weight distribution.

8. The fabric according to any one of claims 1 to 7, wherein said metallocene-catalyzed polyethylene A has a melt index MI2 of at least 0.01 g/10 min, and preferably of at most 1.50 g/10 min as measured according to ISO 1133:2011 Procedure B at a temperature of 190 °C and a load of 2.16 kg.

9. The fabric according to any one of claims 1 to 8, wherein said metallocene-catalyzed polyethylene A has a density of at least 0.905 g/cm3, as measured according to ISO 1183-2:2004 at a temperature of 23 °C.

10. The fabric according to any one of claims 1 to 9, wherein said metallocene-catalyzed polyethylene B has a melt index MI2 of at least 0.5 g/10 min to at most 200 g/10 min as measured according to ISO 1133:2011 Procedure B at a temperature of 190 °C and a load of 2.16 kg.

11. The fabric according to any one of claims 1 to 10, wherein said metallocene-catalyzed polyethylene B has a density of at least 0.920 g/cm$^3$, and preferably of at most 0.962 g/cm$^3$, as measured according to ISO 1183-2:2004 at a

temperature of 23 °C.

12. The fabric according to any one of claims 1 to 11, wherein the fabric is used as a backing for tufted carpets or artificial turf.

13. A backing for tufted carpets or artificial turf, comprising a fabric according to any one of claims 1 to 12, preferably wherein said fabric is a primary backing.

14. The backing according to claim 13, comprising at least one secondary backing.

15. An artificial turf, comprising a backing according to any one of claims 13 or 14.

16. The artificial turf according to claim 15, wherein said artificial turf comprises grass yarns, wherein the grass yarns comprise a polyethylene, preferably at least 70 % by weight, preferably at least 80% by weight, preferably at least 90% by weight, preferably at least 93% by weight, preferably at least 95% by weight, preferably at least 97% by weight, preferably at least 99% by weight of a polyethylene based on the total weight of the grass yarn.

## Patentansprüche

1. Gewebe, umfassend Schlitzfilme, Bänder oder Monofilamente, wobei die Schlitzfilme, Bänder oder Monofilamente mindestens 70 Gew.-% einer Metallocen-katalysierten Polyethylenzusammensetzung umfassen, bezogen auf das Gesamtgewicht der Schlitzfilme, Bänder oder Monofilamente;
wobei die Metallocen-katalysierte Polyethylenzusammensetzung Folgendes umfasst:

    c) mindestens 45 Gew.-% bis höchstens 75 Gew.-%, bezogen auf das Gesamtgewicht der Metallocen-katalysierten Polyethylenzusammensetzung eines Metallocen-katalysierten Polyethylens A,
    wobei das Metallocen-katalysierte Polyethylen A

        - eine Dichte von höchstens 0,918 g/$cm^3$, gemessen gemäß ISO 1183-2:2004 bei einer Temperatur von 23 °C; und
        - einen Schmelzindex MI2 von höchstens 4,0 g/10 min, gemessen gemäß ISO 1133:2011 Verfahren B bei einer Temperatur von 190 °C und einer Last von 2,16 kg; und

    d) mindestens 25 Gew.-% bis höchstens 55 Gew.-%, bezogen auf das Gesamtgewicht der Metallocen-katalysierten Polyethylenzusammensetzung, eines Metallocen-katalysierten Polyethylens B aufweist;
    wobei das Metallocen-katalysierte Polyethylen B

        - eine Dichte, gemessen gemäß ISO 1183-2:2004 bei einer Temperatur von 23 °C, aufweist, die höher ist als die Dichte des Metallocen-katalysierten Polyethylens A; und
        - einen Schmelzindex MI2, gemessen gemäß ISO 1133:2011 Verfahren B bei einer Temperatur von 190 °C und einer Belastung von 2,16 kg, der höher ist als der Schmelzindex MI2 des Metallocen-katalysierten Polyethylens A.

2. Gewebe nach Anspruch 1, wobei die Schlitzfilme, Bänder oder Monofilamente einen Titer von mindestens 100 dTex bis höchstens 1500 dTex aufweisen.

3. Verfahren nach Anspruch 1 oder Anspruch 2, wobei das Gewebe ein gewebtes Gewebe ist.

4. Gewebe nach einem der Ansprüche 1 bis 3, wobei die Metallocen-katalysierte Polyethylenzusammensetzung eine Dichte von mindestens 0,910 g/cm3 bis höchstens 0,945 g/cm3 aufweist, gemessen gemäß ISO 1183-2: 2004 bei einer Temperatur von 23 °C.

5. Gewebe nach einem der Ansprüche 1 bis 4, wobei die Metallocen-katalysierte Polyethylenzusammensetzung einen Schmelzindex MI2 von mindestens 0,2 g/10 min bis höchstens 2,5 g/10 min aufweist, gemessen gemäß ISO 1133:2011 Verfahren B bei einer Temperatur von 190 °C und einer Last von 2,16 kg.

6. Gewebe nach einem der Ansprüche 1 bis 5, wobei die Metallocen-katalysierte Polyethylenzusammensetzung eine

Molekulargewichtsverteilung Mw/Mn von mindestens 2,8 bis höchstens 6,0 aufweist, gemessen unter Verwendung von Gelpermeationschromatographie, wobei Mw das gewichtsmittlere Molekulargewicht und Mn das zahlenmittlere Molekulargewicht ist.

**7.** Gewebe nach einem der Ansprüche 1 bis 6, wobei die Metallocen-katalysierte Polyethylenzusammensetzung eine multimodale Molekulargewichtsverteilung aufweist, vorzugsweise wobei die Metallocen-katalysierte Polyethylenzusammensetzung eine bimodale Molekulargewichtsverteilung aufweist.

**8.** Gewebe nach einem der Ansprüche 1 bis 7, wobei das Metallocen-katalysierte Polyethylen A einen Schmelzindex MI2 von mindestens 0,01 g/10 min und vorzugsweise höchstens 1,50 g/10 min aufweist, gemessen gemäß ISO 1133:2011 Verfahren B bei einer Temperatur von 190 °C und einer Last von 2,16 kg.

**9.** Gewebe nach einem der Ansprüche 1 bis 8, wobei das Metallocen-katalysierte Polyethylen A eine Dichte von mindestens 0,905 g/cm3 aufweist, gemessen gemäß ISO 1183-2:2004 bei einer Temperatur von 23 °C.

**10.** Gewebe nach einem der Ansprüche 1 bis 9, wobei das Metallocen-katalysierte Polyethylen B einen Schmelzindex MI2 von mindestens 0,5 g/10 min bis höchstens 200 g/10 min aufweist, gemessen gemäß ISO 1133:2011 Verfahren B bei einer Temperatur von 190 °C und einer Last von 2,16 kg.

**11.** Gewebe nach einem der Ansprüche 1 bis 10, wobei das Metallocen-katalysierte Polyethylen B eine Dichte von mindestens 0,920 g/$cm^3$ und vorzugsweise höchstens 0,962 g/$cm^3$ aufweist, gemessen gemäß ISO 1183-2:2004 bei einer Temperatur von 23 °C.

**12.** Gewebe nach einem der Ansprüche 1 bis 11, wobei das Gewebe als Unterlage für getuftete Teppiche oder Kunstrasen verwendet wird.

**13.** Unterlage für getuftete Teppiche oder Kunstrasen, umfassend ein Gewebe nach einem der Ansprüche 1 bis 12, vorzugsweise wobei das Gewebe ein primäre Unterlage ist.

**14.** Unterlage nach Anspruch 13, umfassend mindestens eine sekundäre Unterlage.

**15.** Kunstrasen, umfassend eine Unterlage nach einem der Ansprüche 13 oder 14.

**16.** Kunstrasen nach Anspruch 15, wobei der Kunstrasen Grasgarne umfasst, wobei die Grasgarne ein Polyethylen umfassen, vorzugsweise mindestens 70 Gew.-%, vorzugsweise mindestens 80 Gew.-%, vorzugsweise mindestens 90 Gew.-%, vorzugsweise mindestens 93 Gew.-%, vorzugsweise mindestens 95 Gew.-%, vorzugsweise mindestens 97 Gew.-%, vorzugsweise mindestens 99 Gew.-% eines Polyethylens, bezogen auf das Gesamtgewicht des Grasgarns.

## Revendications

**1.** Tissu, comprenant des films, des bandes ou des monofilaments à fente, lesdits films, bandes ou monofilaments à fente comprenant au moins 70 % en poids d'une composition de polyéthylène catalysée par un métallocène, par rapport au poids total des films, bandes ou monofilaments à fente ;
dans lequel ladite composition de polyéthylène catalysée par un métallocène comprend :

c) d'au moins 45 % à au plus 75 % en poids par rapport au poids total de la composition de polyéthylène catalysé par un métallocène d'un polyéthylène A catalysé par un métallocène,
dans lequel ledit polyéthylène A catalysé par un métallocène a

- une densité d'au plus 0,918 g/$cm^3$, telle que mesurée selon l'ISO 1183-2:2004 à une température de 23 °C ; et
- un indice de fusion MI2 d'au plus 4,0g/10 min, mesuré selon la procédure B de l'ISO 1133:2011 à une température de 190 °C et une sous charge de 2,16 kg ; et

d) d'au moins 25 % à au plus 55 % en poids par rapport au poids total de la composition de polyéthylène catalysé par un métallocène d'un polyéthylène B catalysé par un métallocène ;

dans lequel ledit polyéthylène B catalysé par un métallocène a

- une densité telle que mesurée selon l'ISO 1183-2:2004 à une température de 23 °C, qui est supérieure à la densité dudit polyéthylène A catalysé par un métallocène ; et
- un indice de fusion MI2 tel que mesuré selon l'ISO 1133:2011 procédure B à une température de 190 °C et une charge de 2,16 kg, qui est supérieur à l'indice de fusion MI2 dudit polyéthylène A catalysé par un métallocène.

**2.** Tissu selon la revendication 1, dans lequel lesdits films, bandes ou monofilaments à fente ont un titre d'au moins 100 dTex à au plus 1 500 dTex.

**3.** Tissu selon la revendication 1 ou la revendication 2, dans lequel ledit tissu est un tissu tissé.

**4.** Tissu selon l'une quelconque des revendications 1 à 3, dans lequel ladite composition de polyéthylène catalysée par un métallocène a une densité d'au moins 0,910 $g/cm^3$ à au plus 0,945 $g/cm^3$, telle que mesurée selon la norme ISO 1183-2:2004 à une température de 23 °C.

**5.** Tissu selon l'une quelconque des revendications 1 à 4, dans lequel ladite composition de polyéthylène catalysée par un métallocène a un indice de fusion MI2 d'au moins 0,2 g/10 min à au plus 2,5 g/10 min, tel que mesuré selon la norme ISO 1133:2011 procédure B à une température de 190 °C et sous une charge de 2,16 kg.

**6.** Tissu selon l'une quelconque des revendications 1 à 5, dans lequel ladite composition de polyéthylène catalysée par un métallocène a une distribution de masses moléculaires Mw/Mn d'au moins 2,8 à au plus 6,0, telle que mesurée par chromatographie de perméation de gel, Mw représentant la masse moléculaire moyenne en poids et Mn représentant la masse moléculaire moyenne en nombre.

**7.** Tissu selon l'une quelconque des revendications 1 à 6, dans lequel ladite composition de polyéthylène catalysée par un métallocène a une distribution multimodale de masses moléculaires, ladite composition de polyéthylène catalysée par un métallocène présentant de préférence une distribution bimodale de masses moléculaires.

**8.** Tissu selon l'une quelconque des revendications 1 à 7, dans lequel ledit polyéthylène A catalysé par un métallocène ayant un indice de fusion MI2 d'au moins 0,01 g/10 min à au plus 1,50 g/10 min de préférence, tel que mesuré selon la norme ISO 1133:2011 procédure B à une température de 190 °C et sous une charge de 2,16 kg.

**9.** Tissu selon l'une quelconque des revendications 1 à 8, dans lequel ledit polyéthylène A catalysé par un métallocène a une densité d'au moins 0,905 $g/cm^3$, telle que mesurée selon la norme ISO 1183-2:2004 à une température de 23 °C.

**10.** Tissu selon l'une quelconque des revendications 1 à 9, dans lequel ledit polyéthylène B catalysé par un métallocène a un indice de fusion MI2 d'au moins 0,5 g/10 min à au plus 200 g/10 min, mesuré selon la norme ISO 1133:2011 procédure B à une température de 190 °C et sous une charge de 2,16 kg.

**11.** Tissu selon l'une quelconque des revendications 1 à 10, dans lequel le polyéthylène B catalysé par un métallocène a une densité d'au moins 0,920 $g/cm^3$ à au plus 0,962 $g/cm^3$ de préférence, telle que mesurée selon la norme ISO 1183-2:2004 à une température de 23 °C.

**12.** Tissu selon l'une quelconque des revendications 1 à 11, dans lequel le tissu est utilisé comme support pour des tapis touffetés ou pour du gazon artificiel.

**13.** Support pour tapis touffetés ou pour gazon artificiel, comprenant un tissu selon l'une quelconque des revendications 1 à 12, dans lequel ledit tissu est de préférence un support principal.

**14.** Support selon la revendication 13, comprenant au moins un support secondaire.

**15.** Gazon artificiel, comprenant un support selon l'une quelconque des revendications 13 ou 14.

**16.** Gazon artificiel selon la revendication 15, dans lequel ledit gazon artificiel comprend des fils d'herbe, les fils d'herbe comprenant un polyéthylène, de préférence au moins 70 % en poids, de préférence au moins 80 % en poids, de préférence au moins 90 % en poids, de préférence au moins au moins 93 % en poids, de préférence au moins 95

% en poids, de préférence au moins 97 % en poids, de préférence au moins 99 % en poids d'un polyéthylène par rapport au poids total du fil d'herbe.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20130211018 A1
- WO 2011046545 A
- DE 102011011790


### Non-patent literature cited in the description


- Plastics Additives Handbook. Hanser Publishers
- **G.J. RAY et al.** *Macromolecules,* 1977, vol. 10 (4), 773-778
- **Y. D ZHANG et al.** *Polymer Journal,* 2003, vol. 35 (7), 551-559